# EUROPÄISCHE PATENTSCHRIFT

(11) **EP 3 512 904 B1**
(45) Veröffentlichungstag und Bekanntmachung des Hinweises auf die Patenterteilung: **03.12.2025**
(21) Anmeldenummer: 17758904.1
(22) Anmeldetag: 05.09.2017
(51) Int. Cl.: C08G 69/34, C08G 69/36, B29C 48/00, B29C 48/10, B32B 7/12, B32B 27/28, B32B 27/18, B32B 27/30, B32B 27/32, B32B 27/34, B32B 27/36, B32B 27/08

(54) **VERFAHREN ZUR HERSTELLUNG EINES POLYMERFILMS**
METHOD FOR PRODUCING A POLYMER FILM
PROCÉDÉ DE FABRICATION D'UN FILM POLYMÈRE

(30) Priorität: 14.09.2016 EP 16188742
(43) Veröffentlichungstag der Anmeldung: 24.07.2019
(73) Patentinhaber: BASF SE, 67056 Ludwigshafen am Rhein (DE)
(72) Erfinder: GOETZ, Walter, 88167 Gruenenbach (DE); MINKWITZ, Rolf, 67056 Ludwigshafen (DE); GRUETZNER, Rolf-Egbert, 67056 Ludwigshafen (DE); RICHTER, Florian, 67056 Ludwigshafen (DE)
(74) Vertreter: BASF IP Association
(86) Internationale Anmeldenummer: PCT/EP2017/072224
(87) Internationale Veröffentlichungsnummer: WO 2018/050486

(56) Entgegenhaltungen:
- EP-A1- 1 673 114
- EP-A1- 2 993 041
- EP-A1- 3 045 290
- EP-A2- 0 352 562
- DE-A1- 1 629 282
- US-A1- 2003 232 962

## Beschreibung

Die vorliegende Erfindung betrifft ein Verfahren zur Herstellung eines Polymerfilms (P), der mindestens ein Copolyamid enthält, durch Extrusion des Copolyamids durch eine Ringdüse und anschließendes Verstrecken des so erhaltenen Schlauchs durch Einblasen von Luft. Darüber hinaus betrifft die vorliegende Erfindung den Polymerfilm (P), erhältlich nach dem erfindungsgemäßen Verfahren.

Polyamide sind industriell von besonderer Bedeutung, da sie sich durch sehr gute mechanische Eigenschaften auszeichnen, insbesondere besitzen sie eine hohe Festigkeit und Zähigkeit, eine gute Chemikalienbeständigkeit sowie eine hohe Abriebfestigkeit. Sie werden beispielsweise zur Herstellung von Angelschnüren, Kletterseilen und Teppichböden verwendet. Darüber hinaus finden Polyamide Anwendung zur Herstellung von Verpackungsfilmen und Verpackungshüllen.

Eine Übersicht über die Verwendung als Verpackungsfilme und Verpackungshüllen sowie Verfahren zu deren Herstellung ist beispielsweise in Encylcopedia of Polymer Science and Engineering 2nd Ed., Vol. 7, pp. 73-127*,* Vol. 10, pp. 684-695 (John Wiley & Sons, Inc., 1987*)* beschrieben. Die darin beschriebenen Polyamidfilme sind jedoch sehr steif, haben eine niedrige Weiterreißfestigkeit und eine hohe Dichte.

Für Verpackungsfilme und Verpackungshüllen werden daher häufig Copolyamide, die positive Eigenschaften von verschiedenen Polyamiden in sich vereinen, eingesetzt. Im Stand der Technik sind verschiedene Copolyamide beschrieben.

Die EP 0 352 562 beschreibt Folien aus Copolyamiden, wobei die Copolyamide hergestellt sind aus ε-Caprolactam und vorzugsweise 1 bis 10 Gewichtsteilen einer Dimersäure und einem Diamin. Die Copolyamide können dann zur Herstellung von Flach- oder Blasfolien eingesetzt werden. Ebenso eignen sie sich zur Herstellung von Verbundfolien.

Nachteilig bei den in der EP 0 352 562 beschriebenen Folien aus Copolyamid ist, dass sie eine relativ geringe Weiterreißfestigkeit, ein hohes E-Modul und eine geringe Durchstoßenergie aufweisen.

EP 2 993 041 A1 beschreibt mehrschichtige Schrumpf-Filme zum Verpacken von Lebensmitteln, die eine Basisschicht aus Polyamiden enthalten können. Die beschriebenen Polyamide enthalten keine Dimersäure.

Die DE 28 46 596 beschreibt Formkörper aus einem Copolyamid aus Caprolactam, Fettsäuredimeren und Hexamethylendiamin. Die beschriebenen Thermoplasten lassen sich jedoch nicht zu einem Film extrudieren.

Nachteilig bei den Polymerfilmen wie sie in Verfahren aus dem Stand der Technik hergestellt sind, ist, dass die Polymerfilme häufig eine hohe Rückstellkraft aufweisen und häufig sehr steif sind.

Der vorliegenden Erfindung liegt daher die Aufgabe zugrunde, ein Verfahren zur Herstellung eines Polymerfilms (P) bereitzustellen, das die Nachteile der im Stand der Technik beschriebenen Verfahren nicht oder nur in sehr vermindertem Maße aufweist. Das Verfahren sollte zudem möglichst einfach und kostengünstig durchführbar sein.

Gelöst wird diese Aufgabe durch ein Verfahren zur Herstellung eines Polymerfilms (P), umfassend die Schritte
i) Bereitstellen mindestens eines Copolyamids, hergestellt durch Polymerisation der Komponenten
   (A) 15 bis 84 Gew.-% mindestens eines Lactams,
   (B) 16 bis 85 Gew.-% eines Monomergemisches (M), das die Komponenten
      (B1) mindestens eine C₃₂-C₄₀-Dimersäure und
      (B2) mindestens ein C₄-C₁₂-Diamin
      enthält,
   wobei die Gewichtsprozente der Komponenten (A) und (B) jeweils bezogen sind auf die Summe der Gewichtsprozente der Komponenten (A) und (B), in geschmolzener Form in einem ersten Extruder,
ii) Extrusion des in Schritt i) bereitgestellten mindestens einen Copolyamids in geschmolzener Form aus dem ersten Extruder durch eine Ringdüse unter Erhalt eines Schlauchs, der das mindestens eine Copolyamid in geschmolzener Form enthält,
iii) Abkühlen des in Schritt ii) erhaltenen Schlauchs, der das mindestens eine Copolyamid in geschmolzener Form enthält, in einem Wasserbad auf eine erste Temperatur (T₁), wobei das mindestens eine Copolyamid erstarrt unter Erhalt eines ersten Schlauchfilms, der das mindestens eine Copolyamid enthält,
   wobei der Schlauch während des Abkühlens über ein erstes Rollensystem geführt wird, wobei der Schlauch in seiner Länge verstreckt wird,
iv) Erwärmen des in Schritt iii) erhaltenen ersten Schlauchfilms auf eine zweite Temperatur (T₂) unter Erhalt eines erwärmten ersten Schlauchfilms, der das mindestens eine Copolyamid enthält,
v) Einblasen von Luft in den in Schritt iv) erhaltenen erwärmten ersten Schlauchfilm, wobei der erwärmte erste Schlauchfilm in seiner Breite verstreckt wird, und wobei der erwärmte erste Schlauchfilm auf eine dritte Temperatur (T₃) abkühlt unter Erhalt des Polymerfilms (P), der das mindestens eine Copolyamid enthält.

Ein durch das erfindungsgemäße Verfahren hergestellter Polymerfilm (P) weist überraschenderweise eine hohe Weiterreißfestigkeit sowohl in Extrusionsrichtung als auch senkrecht dazu auf. Dies ist insbesondere vorteilhaft, wenn der erfindungsgemäß hergestellte Polymerfilm (P) in einem Verfahren zum Verpacken von Lebensmitteln eingesetzt wird.

Der mit dem erfindungsgemäßen Verfahren hergestellte Polymerfilm (P) weist zudem eine niedrigere Rückstellkraft nach DIN 53369 auf und zeichnet sich außerdem durch gute Schrumpfungseigenschaften aus.

Darüber hinaus weist der erfindungsgemäß hergestellte Polymerfilm (P) eine hohe Transparenz sowie ein hohe Tieftemperaturzähigkeit auf. Vorteilhaft ist darüber hinaus, dass der mit dem erfindungsgemäßen Verfahren hergestellte Polymerfilm (P) weniger steif ist als die mit Verfahren, wie sie im Stand der Technik beschrieben sind, hergestellten Polymerfilme. Der erfindungsgemäß hergestellte Polymerfilm (P) weist außerdem ein geringes E-Modul und eine hohe Durchstoßfestigkeit im trockenen Zustand auf. Die hohe Durchstoßfestigkeit ist ebenfalls insbesondere dann von Bedeutung, wenn der Polymerfilm (P) zum Verpacken von Lebensmitteln verwendet wird.

Nachfolgend wird das erfindungsgemäße Verfahren näher erläutert.

### Schritt i)

In Schritt i) wird mindestens ein Copolyamid in geschmolzener Form in einem Extruder bereitgestellt. Das mindestens eine Copolyamid wird hergestellt durch Polymerisation der Komponenten (A), 15 bis 84 Gew.-% mindestens eines Lactams, und (B) 16 bis 85 Gew.-% eines Monomergemischs (M), wobei die Gewichtsprozente der Komponenten (A) und (B) jeweils bezogen sind auf die Summe der Gewichtsprozente der Komponenten (A) und (B). Das Monomergemisch (M) enthält die Komponenten (B1), mindestens eine C₃₂-C₄₀-Dimersäure und (B2) mindestens ein C₄-C₁₂-Diamin.

"Mindestens ein Copolyamid" bedeutet im Rahmen der vorliegenden Erfindung sowohl genau ein Copolyamid als auch eine Mischung aus zwei oder mehreren Copolyamiden.

"Ein erster Extruder" bedeutet im Rahmen der vorliegenden Erfindung sowohl genau ein erster Extruder als auch zwei oder mehrere erste Extruder. Üblicherweise werden im erfindungsgemäßen Verfahren so viele erste Extruder eingesetzt wie erste Schichten, die das mindestens eine Copolyamid enthalten, in dem herzustellenden Polymerfilm (P) enthalten sein sollen.

Soll der im erfindungsgemäßen Verfahren hergestellte Polymerfilm (P) beispielsweise genau eine erste Schicht enthalten, die das mindestens eine Copolyamid enthält, so wird genau ein erster Extruder eingesetzt. Soll der Polymerfilm (P) genau zwei erste Schichten enthalten, die das mindestens eine Copolyamid enthalten, so werden genau zwei erste Extruder eingesetzt. Soll der Polymerfilm (P) genau fünf erste Schichten enthalten, die das mindestens eine Copolyamid enthalten, so werden genau fünf erste Extruder eingesetzt.

Beispielsweise wird das mindestens eine Copolyamid in einem bis elf ersten Extrudern bereitgestellt, bevorzugt in einem bis fünf ersten Extrudern und besonders bevorzugt in einem bis drei ersten Extrudern.

Erfindungsgemäß wird das mindestens eine Copolyamid in geschmolzener Form bereitgestellt.

"In geschmolzener Form" bedeutet im Rahmen der vorliegenden Erfindung, dass das mindestens eine Copolyamid bei einer Temperatur (T_{C}) bereitgestellt wird, die oberhalb der Schmelztemperatur (T_{M(C)}) des mindestens einen Copolyamids liegt. "In geschmolzener Form" bedeutet also, dass das mindestens eine Copolyamid eine Temperatur (T_{C}) aufweist, die oberhalb der Schmelztemperatur (T_{M(C)}) des mindestens einen Copolyamids liegt. Liegt das mindestens eine Copolyamid in geschmolzener Form vor, so ist das mindestens eine Copolyamid fließfähig.

"Fließfähig" bedeutet, dass das mindestens eine Copolyamid in dem ersten Extruder gefördert werden kann, und dass das mindestens eine Copolyamid aus dem ersten Extruder extrudiert werden kann.

Beispielsweise wird das mindestens eine Copolyamid in Schritt i) bei einer Temperatur (T_{C}) im Bereich von 170 bis 300 °C, bevorzugt im Bereich von 200 bis 290 °C und insbesondere bevorzugt im Bereich von 230 bis 280 °C bereitgestellt, jeweils unter der Voraussetzung, dass die Temperatur (T_{C}), bei der das mindestens eine Copolyamid bereitgestellt wird, oberhalb der Schmelztemperatur (T_{M(C)}) des mindestens einen Copolyamids liegt.

Das mindestens eine Copolyamid kann nach allen dem Fachmann bekannten Methoden in geschmolzener Form in dem ersten Extruder bereitgestellt werden.

Beispielsweise kann das mindestens eine Copolyamid in geschmolzener oder in fester Form dem ersten Extruder zugeführt werden. Wird das mindestens eine Copolyamid dem ersten Extruder in fester Form zugeführt, so kann es dem ersten Extruder beispielsweise als Granulat und/oder als Pulver zugeführt werden. Das mindestens eine Copolyamid wird dann in dem ersten Extruder aufgeschmolzen und so in geschmolzener Form in dem ersten Extruder bereitgestellt. Diese Ausführungsform ist bevorzugt.

Darüber hinaus ist es möglich, dass die Komponenten (A) und (B) direkt in dem ersten Extruder polymerisiert werden und so das mindestens eine Copolyamid in geschmolzener Form in dem Extruder bereitgestellt wird. Verfahren hierzu sind dem Fachmann bekannt.

Es ist darüber hinaus möglich, dass in Schritt i) zusammen mit dem mindestens einen Copolyamid in geschmolzener Form Additive in dem ersten Extruder bereitgestellt werden. Die Additive werden mit dem mindestens einen Copolyamid in geschmolzener Form in dem ersten Extruder üblicherweise compoundiert (vermischt). Verfahren hierzu sind dem Fachmann bekannt.

Geeignete Additive sind dem Fachmann bekannt und beispielsweise ausgewählt aus der Gruppe bestehend aus Stabilisatoren, Farbstoffen, Antistatika, Tackifiern, Antiblockmittel, Verarbeitungshilfsmitteln, Antioxidantien, Lichtstabilisatoren, UV-Absorbern, Gleitmitteln und Nukleierungs-hilfsmitteln.

Als Farbstoffe sind organische und anorganische Pigmente, wie beispielsweise mit einer Schlichte versehenes Titandioxid, geeignet. Als Tackifier eignen sich beispielsweise Polyisobutylen (PIB) oder Ethylvinylacetat (EVA). Geeignete Antiblockmittel sind beispielsweise Siliziumdioxid- oder Calciumcarbonatpartikel. Geeignete Lichtstabilisatoren sind beispielsweise sogenannte HALS (Hindered Amine Light Stabilizer). Als Verarbeitungshilfs- oder Gleitmittel kann beispielsweise Ethylenbis-stearamid (EBS) Wachs eingesetzt werden. Nukleierungshilfsmittel können beispielsweise alle Arten von organischen oder anorganischen Kristallisations-keimbildnern sein, wie zum Beispiel Talk.

Nachfolgend wird das mindestens eine Copolyamid näher beschrieben.

### Copolyamid

Erfindungsgemäß wird das mindestens eine Copolyamid hergestellt durch Polymerisation der Komponenten
(A) 15 bis 84 Gew.-% mindestens eines Lactams,
(B) 16 bis 85 Gew.-% eines Monomergemisches (M), das die Komponenten
   (B1) mindestens eine C₃₂-C₄₀-Dimersäure und
   (B2) mindestens ein C₄-C₁₂-Diamin
   enthält, wobei die Gewichtsprozente der Komponenten (A) und (B) jeweils bezogen sind auf die Summe der Gewichtsprozente der Komponenten (A) und (B).

Die Begriffe "Komponente (A)" und "mindestens ein Lactam" werden im Rahmen der vorliegenden Erfindung synonym gebraucht und besitzen daher die gleiche Bedeutung.

Entsprechendes gilt für die Begriffe "Komponente (B)" und "Monomergemisch (M)". Diese Begriffe werden im Rahmen der vorliegenden Erfindung ebenfalls synonym gebraucht und besitzen daher die gleiche Bedeutung.

Erfindungsgemäß ist das mindestens eine Copolyamid hergestellt durch Polymerisation von 15 bis 84 Gew.-% der Komponente (A) und 16 bis 85 Gew.-% der Komponente (B), bevorzugt ist das mindestens eine Copolyamid hergestellt durch Polymerisation von 40 bis 83 Gew.-% der Komponente (A) und 17 bis 60 Gew.-% der Komponente (B) und insbesondere bevorzugt ist das mindestens eine Copolyamid hergestellt durch Polymerisation von 60 bis 80 Gew.-% der Komponente (A) und 20 bis 40 Gew.-% der Komponente (B), wobei die Gewichtsprozente der Komponenten (A) und (B) jeweils bezogen sind auf die Summe der Gewichtsprozente der Komponenten (A) und (B).

Bevorzugt ergibt die Summe der Gewichtsprozente der Komponenten (A) und (B) 100 Gew.-%.

Es versteht sich von selbst, dass sich die Gewichtsprozente der Komponenten (A) und (B) auf die Gewichtsprozente der Komponenten (A) und (B) vor der Polymerisation beziehen, also wenn die Komponenten (A) und (B) noch nicht miteinander reagiert haben. Während der Polymerisation der Komponenten (A) und (B) kann sich das Gewichtsverhältnis der Komponenten (A) und (B) gegebenenfalls ändern.

Erfindungsgemäß wird das mindestens eine Copolyamid hergestellt durch Polymerisation der Komponenten (A) und (B). Die Polymerisation der Komponenten (A) und (B) ist dem Fachmann bekannt. Üblicherweise ist die Polymerisation der Komponenten (A) mit (B) eine Kondensationsreaktion. Während der Kondensationsreaktion reagiert die Komponente (A) mit den in der Komponente (B) enthaltenen Komponenten (B1) und (B2) sowie gegebenenfalls der weiter unten beschriebenen Komponente (B3), die ebenfalls in der Komponente (B) enthalten sein kann. Dabei bilden sich Amidbindungen zwischen den einzelnen Komponenten aus. Üblicherweise liegt die Komponente (A) während der Polymerisation zumindest teilweise offenkettig, also als Aminosäure, vor.

Die Polymerisation der Komponenten (A) und (B) kann in Gegenwart eines Katalysators stattfinden. Als Katalysator eignen sich alle dem Fachmann bekannten Katalysatoren, die die Polymerisation der Komponenten (A) und (B) katalysieren. Derartige Katalysatoren sind dem Fachmann bekannt. Bevorzugte Katalysatoren sind Phosphorverbindungen wie beispielsweise Natriumhypophosphit, phosphorige Säure, Triphenylphosphin oder Triphenylphosphit.

Bei der Polymerisation der Komponenten (A) und (B) bildet sich das mindestens eine Copolyamid, das daher Baueinheiten enthält, die von der Komponente (A) abgeleitet sind, und Baueinheiten, die von der Komponente (B) abgeleitet sind. Baueinheiten, die von der Komponente (B) abgeleitet sind, enthalten Baueinheiten, die von den Komponenten (B1) und (B2) sowie gegebenenfalls von der Komponente (B3) abgeleitet sind.

Bei der Polymerisation der Komponenten (A) und (B) bildet sich das Copolyamid als Copolymer. Das Copolymer kann ein statistisches Copolymer sein. Ebenso ist es möglich, dass es sich um ein Blockcopolymer handelt.

In einem Blockcopolymer bilden sich Blöcke von Einheiten, die von der Komponente (B) abgeleitet sind, und Blöcke von Einheiten, die von der Komponente (A) abgeleitet sind. Diese wechseln sich ab. Bei einem statistischen Copolymer wechseln sich Baueinheiten, die von der Komponente (A) abgeleitet sind, mit Baueinheiten, die von der Komponente (B) abgeleitet sind, ab. Diese Abwechslung erfolgt statistisch. Beispielsweise kann auf zwei von der Komponente (B) abgeleitete Baueinheiten eine Baueinheit, die von der Komponente (A) abgeleitet ist, folgen, auf die wiederum eine von der Komponente (B) abgeleitete Baueinheit folgt, auf die dann eine Baueinheit folgt, die drei von der Komponente (A) abgeleitete Baueinheiten enthält.

Bevorzugt ist das mindestens eine Copolyamid ein statistisches Copolymer.

Gegenstand der vorliegenden Erfindung ist daher auch ein Verfahren, bei dem das mindestens eine Copolyamid ein statistisches Copolymer ist.

Die Herstellung des mindestens einen Copolyamids umfasst bevorzugt die folgenden Schritte.
I) Polymerisation der Komponenten (A) und (B) unter Erhalt mindestens eines ersten Copolyamids,
II) Granulieren des in Schritt I) erhaltenen mindestens einen ersten Copolyamids unter Erhalt mindestens eines granulierten Copolyamids,
III) Extraktion des in Schritt II) erhaltenen mindestens einen granulierten Copolyamids mit Wasser unter Erhalt mindestens eines extrahierten Copolyamids,
IV) Trocknen des in Schritt III) erhaltenen mindestens einen extrahierten Copolyamids bei einer Temperatur (T_{T}) unter Erhalt des mindestens einen Copolyamids.

Gegenstand der vorliegenden Erfindung ist daher auch ein Verfahren, bei dem das mindestens eine Copolyamid hergestellt wird in einem Verfahren umfassend die folgenden Schritte:
I) Polymerisation der Komponenten (A) und (B) unter Erhalt mindestens eines ersten Copolyamids,
II) Granulieren des in Schritt I) erhaltenen mindestens einen ersten Copolyamids unter Erhalt mindestens eines granulierten Copolyamids,
III) Extraktion des in Schritt II) erhaltenen mindestens einen granulierten Copolyamids mit Wasser unter Erhalt mindestens eines extrahierten Copolyamids,
IV) Trocken des in Schritt III) erhaltenen mindestens einen extrahierten Copolyamids bei einer Temperatur (T_{T}) unter Erhalt des mindestens einen Copolyamids.

Die Polymerisation in Schritt I) kann in allen dem Fachmann bekannten Reaktoren stattfinden. Bevorzugt sind Rührkesselreaktoren. Es können zusätzlich dem Fachmann bekannte Hilfsmittel zur Verbesserung der Reaktionsführung wie beispielsweise Entschäumer wie Polydimethylsiloxan (PDMS) eingesetzt werden.

In Schritt II) kann das in Schritt I) erhaltene mindestens eine erste Copolyamid nach allen dem Fachmann bekannten Methoden granuliert werden, beispielsweise mittels Stranggranulierung oder Unterwassergranulierung.

Die Extraktion in Schritt III) kann nach allen dem Fachmann bekannten Methoden erfolgen.

Während der Extraktion in Schritt III) werden üblicherweise während der Polymerisation der Komponenten (A) und (B) in Schritt I) gebildete Nebenprodukte aus dem mindestens einen granulierten Copolyamid extrahiert.

In Schritt IV) wird das in Schritt III) erhaltene mindestens eine extrahierte Copolyamid getrocknet. Verfahren zum Trocknen sind dem Fachmann bekannt. Erfindungsgemäß wird das mindestens eine extrahierte Copolyamid bei einer Temperatur (T_{T}) getrocknet. Die Temperatur (T_{T}) liegt vorzugsweise oberhalb der Glasübergangstemperatur (T_{G(C)}) des mindestens einen Copolyamids und unterhalb der Schmelztemperatur (T_{M(C)}) des mindestens einen Copolyamids.

Die Trocknung in Schritt IV) erfolgt üblicherweise für einen Zeitraum im Bereich von 1 bis 100 Stunden, bevorzugt im Bereich von 2 bis 50 Stunden und insbesondere bevorzugt im Bereich von 3 bis 40 Stunden.

Es besteht die Vorstellung, dass durch das Trocknen in Schritt IV) das Molekulargewicht des mindestens einen Copolyamids weiter erhöht wird.

Das mindestens eine Copolyamid weist üblicherweise eine Glasübergangstemperatur (T_{G(C)}) auf. Die Glasübergangstemperatur (T_{G(C)}) liegt beispielsweise im Bereich von 20 bis 50 °C, bevorzugt im Bereich von 23 bis 47 °C und insbesondere bevorzugt im Bereich von 25 bis 45 °C, bestimmt gemäß ISO 11357-2:2014.

Gegenstand der vorliegenden Erfindung ist daher auch ein Verfahren, bei dem das mindestens eine Copolyamid eine Glasübergangstemperatur (T_{G(C)}) aufweist, wobei die Glasübergangtemperatur (T_{G(C)}) im Bereich von 20 bis 50 °C liegt.

Die Glasübergangstemperatur (T_{G(C)}) des mindestens einen Copolyamids bezieht sich entsprechend der ISO 11357-2:2014 im Rahmen der vorliegenden Erfindung auf die Glasübergangstemperatur (T_{G(C)}) des trockenen Copolyamids.

"Trocken" bedeutet im Rahmen der vorliegenden Erfindung, dass das mindestens eine Copolyamid weniger als 1 Gew.-%, bevorzugt weniger als 0,5 Gew.-% und insbesondere bevorzugt weniger als 0,1 Gew.-% Wasser enthält, bezogen auf das Gesamtgewicht des mindestens einen Copolyamids. Mehr bevorzugt bedeutet "trocken", dass das mindestens eine Copolyamid kein Wasser enthält, und am meisten bevorzugt, dass das mindestens eine Copolyamid kein Lösungsmittel enthält.

Das mindestens eine Copolyamid weist darüber hinaus üblicherweise eine Schmelztemperatur (T_{M(C)}) auf. Die Schmelztemperatur (T_{M(C)}) des mindestens einen Copolyamids liegt beispielsweise im Bereich von 150 bis 210 °C, bevorzugt im Bereich von 160 bis 205 °C und insbesondere bevorzugt im Bereich von 160 bis 200 °C, bestimmt gemäß ISO 11357-3:2014.

Gegenstand der vorliegenden Erfindung ist daher auch ein Verfahren, bei dem das mindestens eine Copolyamid eine Schmelztemperatur (T_{M(C)}) aufweist, wobei die Schmelztemperatur (T_{M(C)}) im Bereich von 150 bis 210 °C liegt.

Das mindestens eine Copolyamid weist im Allgemeinen eine Viskositätszahl (VZ_{(C)}) im Bereich von 150 bis 300 ml/g auf, bestimmt in einer 0,5-gewichtsprozentigen Lösung des mindestens einen Copolyamids in einer Mischung aus Phenol/o-Dichlorbenzol im Gewichtsverhältnis 1 : 1.

Bevorzugt liegt die Viskositätszahl (VZ_{(C)}) des mindestens einen Copolyamids im Bereich von 160 bis 290 ml/g und besonders bevorzugt im Bereich von 170 bis 280 ml/g, bestimmt in einer 0,5-gewichtsprozentigen Lösung des mindestens einen Copolyamids in einer Mischung aus Phenol/o-Dichlorbenzol im Gewichtsverhältnis 1 : 1.

Gegenstand der vorliegenden Erfindung ist daher auch ein Verfahren, bei dem das mindestens eine Copolyamid eine Viskositätszahl (VZ_{(C)}) im Bereich von 150 bis 300 ml/g aufweist, bestimmt in einer 0,5-gewichtsprozentigen Lösung des mindestens einen Copolyamids in einer Mischung aus Phenol/o-Dichlorbenzol im Verhältnis 1 : 1.

### Komponente (A)

Erfindungsgemäß ist die Komponente (A) mindestens ein Lactam.

"Mindestens ein Lactam" bedeutet im Rahmen der vorliegenden Erfindung sowohl genau ein Lactam als auch eine Mischung aus zwei oder mehreren Lactamen.

Lactame sind dem Fachmann als solche bekannt. Erfindungsgemäß bevorzugt sind Lactame mit 4 bis 12 Kohlenstoffatomen.

Unter "Lactamen" werden im Rahmen der vorliegenden Erfindung zyklische Amide verstanden, die im Ring vorzugsweise 4 bis 12, besonders bevorzugt 5 bis 8 Kohlenstoffatome aufweisen.

Geeignete Lactame sind beispielsweise ausgewählt aus der Gruppe bestehend aus 3-Aminopropansäurelactam (Propio-3-lactam; β-Lactam; β-Propiolactam), 4-Aminobutansäurelactam (Butyro-4-lactam; γ-Lactam; γ-Butyrolactam), Aminopentansäurelactam (2-Piperidinon; δ-Lactam; δ-Valerolactam), 6-Aminohexansäurelactam (Hexano-6-lactam; ε-Lactam; ε-Caprolactam), 7-Aminoheptansäurelactam (Heptano-7-lactam; ζ-Lactam; ζ-Heptanolactam), 8-Aminooktansäurelactam (Oktano-8-lactam; η-Lactam; η-Oktanolactam), 9-Aminononansäurelactam (Nonano-9-lactam; θ-Lactam; θ-Nonanolactam), 10-Aminodekansäurelactam (Dekano-10-lactam; ω-Dekanolactam), 11-Aminoundekansäurelactam (Undekano-11-lactam; ω-Undekanolactam) und 12-Aminododekansäurelactam (Dodekano-12-lactam; ω-Dodekanolactam).

Gegenstand der vorliegenden Erfindung ist daher auch ein Verfahren, bei dem die Komponente (A) ausgewählt ist aus der Gruppe bestehend aus 3-Aminopropansäurelactam, 4-Aminobutansäurelactam, 5-Aminopentansäurelactam, 6-Aminohexansäurelectam, 7-Aminoheptansäurelactam, 8-Aminooctansäurelactam, 9-Aminononansäurelactam, 10-Aminodecansäurelactam, 11-Aminoundecansäurelactam und 12-Aminododecansäurelactam.

Die Lactame können unsubstituiert oder zumindest monosubstituiert sein. Für den Fall, dass zumindest monosubstituierte Lactame eingesetzt werden, können diese am Stickstoffatom und/oder an den Kohlenstoffatomen des Rings einen, zwei oder mehrere Substituenten tragen, die unabhängig voneinander ausgewählt sind aus der Gruppe bestehend aus C₁- bis C₁₀-Alkyl, C₅- bis C₆-Cycloalkyl und C₅- bis C₁₀-Aryl.

Als C₁- bis C₁₀-Alkylsubstuenten sind beispielsweise Methyl, Ethyl, Propyl, iso-Propyl, n-Butyl, sek-Butyl und tert-Butyl geeignet. Ein geeigneter C₅- bis C₆-Cycloalkylsubstituent ist beispielsweise Cyclohexyl. Bevorzugte C₅- bis C₁₀-Arylsubstituenten sind Phenyl oder Anthranyl.

Bevorzugt werden unsubstituierte Lactame eingesetzt, wobei γ-Lactam (γ-Butyrolactam), δ-Lactam (δ-Valerolactam) und ε-Lactam (ε-Caprolactam) bevorzugt sind. Besonders bevorzugt sind δ-Lactam (δ-Valerolactam) und ε-Lactam (ε-Caprolactam), wobei ε-Caprolactam insbesondere bevorzugt ist.

### Monomergemisch (M)

Erfindungsgemäß ist die Komponente (B) ein Monomergemisch (M). Das Monomergemisch (M) enthält die Komponenten (B1), mindestens eine C₃₂-C₄₀-Dimersäure, und (B2), mindestens ein C₄-C₁₂-Diamin.

Unter einem Monomergemisch (M) wird im Rahmen der vorliegenden Erfindung eine Mischung aus zwei oder mehreren Monomeren verstanden, wobei zumindest die Komponenten (B1) und (B2) in dem Monomergemisch (M) enthalten sind.

Die Begriffe "Komponente (B1)" und "mindestens eine C₃₂-C₄₀-Dimersäure" werden im Rahmen der vorliegenden Erfindung synonym gebraucht und besitzen daher die gleiche Bedeutung. Entsprechendes gilt für die Begriffe "Komponente (B2)" und "mindestens ein C₄-C₁₂-Diamin". Diese Begriffe werden im Rahmen der vorliegenden Erfindung ebenfalls synonym gebraucht und besitzen daher die gleiche Bedeutung.

Das Monomergemisch (M) enthält beispielsweise im Bereich von 45 bis 55 Mol-% der Komponente (B1) und im Bereich von 45 bis 55 Mol-% der Komponente (B2), jeweils bezogen auf die Summe der Molprozente der Komponenten (B1) und (B2), bevorzugt bezogen auf die Gesamtstoffmenge des Monomergemischs (M).

Bevorzugt enthält die Komponente (B) im Bereich von 47 bis 53 Mol-% der Komponente (B1) und im Bereich von 47 bis 53 Mol-% der Komponente (B2), jeweils bezogen auf die Summe der Molprozente der Komponenten (B1) und (B2), bevorzugt bezogen auf die Gesamtstoffmenge der Komponente (B).

Besonders bevorzugt enthält die Komponente (B) im Bereich von 49 bis 51 Mol-% der Komponente (B1) und im Bereich von 49 bis 51 Mol-% der Komponente (B2), jeweils bezogen auf die Summe der Molprozente der Komponenten (B1) und (B2), bevorzugt bezogen auf die Gesamtstoffmenge der Komponente (B).

Gegenstand der vorliegenden Erfindung ist daher auch ein Verfahren, bei dem die Komponente (B) im Bereich von 45 bis 55 Mol-% der Komponente (B1) und im Bereich von 45 bis 55 Mol-% der Komponente (B2) enthält, jeweils bezogen auf die Gesamtstoffmenge der Komponente (B).

Die Summe der Molprozente der in der Komponente (B) enthaltenen Komponenten (B1) und (B2) addieren sich üblicherweise zu 100 Mol-%

Die Komponente (B) kann zusätzlich eine Komponente (B3), mindestens eine C₄-C₂₀-Disäure enthalten.

Gegenstand der vorliegenden Erfindung ist daher auch ein Verfahren, bei dem die Komponente (B) zusätzlich eine Komponente (B3), mindestens eine C₄-C₂₀-Disäure enthält.

Die Begriffe "Komponente (B3)" und "mindestens eine C₄-C₂₀-Disäure" werden im Rahmen der vorliegenden Erfindung synonym gebraucht und besitzen daher die gleiche Bedeutung.

Wenn die Komponente (B) zusätzlich die Komponente (B3) enthält, so ist es bevorzugt, dass die Komponente (B) im Bereich von 25 bis 54,9 Mol-% der Komponente (B1), im Bereich von 45 bis 55 Mol-% der Komponente (B2) und im Bereich von 0,1 bis 25 Mol-% der Komponente (B3) enthält, jeweils bezogen auf die Gesamtstoffmenge der Komponente (B).

Besonders bevorzugt enthält die Komponente (B) dann im Bereich von 13 bis 52,9 Mol-% der Komponente (B1), im Bereich von 47 bis 53 Mol-% der Komponente (B2) und im Bereich von 0,1 bis 13 Mol-% der Komponente (B3), jeweils bezogen auf die Gesamtstoffmenge der Komponente (B).

Am meisten bevorzugt enthält die Komponente (B) dann im Bereich von 7 bis 50,9 Mol-% der Komponente (B1), im Bereich von 49 bis 51 Mol-% der Komponente (B2) und im Bereich von 0,1 bis 7 Mol-% der Komponente (B3), jeweils bezogen auf die Gesamtstoffmenge der Komponente (B).

Wenn die Komponente (B) zusätzlich die Komponente (B3) enthält, addieren sich die Molprozente der Komponenten (B1), (B2) und (B3) üblicherweise zu 100 Mol-%.

Das Monomergemisch (M) kann darüber hinaus Wasser enthalten.

Die Komponenten (B1) und (B2) sowie gegebenenfalls (B3) der Komponente (B) können miteinander reagieren unter Erhalt von Amiden. Diese Reaktion ist dem Fachmann als solche bekannt. Daher kann die Komponente (B) die Komponenten (B1), (B2) sowie gegebenenfalls (B3) in vollständig reagierter Form, in teilweise reagierter Form oder in nichtreagierter Form enthalten. Bevorzugt enthält die Komponente (B) die Komponenten (B1) und (B2) sowie gegebenenfalls (B3) in nichtreagierter Form.

"In nichtreagierter Form" bedeutet im Rahmen der vorliegenden Erfindung also, dass die Komponente (B1) als die mindestens eine C₃₂-C₄₀-Dimersäure vorliegt und die Komponente (B2) als das mindestens eine C₄-C₁₂-Diamin sowie gegebenenfalls die Komponente (B3) als die mindestens eine C₄-C₂₀-Disäure.

Haben die Komponenten (B1) und (B2) sowie gegebenenfalls (B3) zumindest teilweise reagiert, so liegen die Komponenten (B1) und (B2) sowie gegebenenfalls (B3) zumindest teilweise als Amid vor.

### Komponente (B1)

Die Komponente (B1) ist erfindungsgemäß mindestens eine C₃₂-C₄₀-Dimersäure.

"Mindestens eine C₃₂-C₄₀-Dimersäure" bedeutet im Rahmen der vorliegenden Erfindung sowohl genau eine C₃₂-C₄₀-Dimersäure als auch eine Mischung aus zwei oder mehreren C₃₂-C₄₀-Dimersäuren.

Dimersäuren werden auch als Dimerfettsäuren bezeichnet. C₃₂-C₄₀-Dimersäuren sind dem Fachmann als solche bekannt und werden üblicherweise hergestellt durch Dimerisierung ungesättigter Fettsäuren. Diese Dimerisierung kann beispielsweise durch Tonerden katalysiert werden.

Geeignete ungesättigte Fettsäuren zur Herstellung der mindestens einen C₃₂-C₄₀-Dimersäure sind dem Fachmann bekannt und beispielsweise ungesättigte C₁₆-Fettsäuren, ungesättigte C₁₈-Fettsäuren und ungesättigte C₂₀-Fettsäuren.

Bevorzugt wird die Komponente (B1) daher hergestellt ausgehend von ungesättigten Fettsäuren, ausgewählt aus der Gruppe bestehend aus ungesättigten C₁₆-Fettsäuren, ungesättigten C₁₈-Fettsäuren und ungesättigten C₂₀-Fettsäuren, wobei die ungesättigten C₁₈-Fettsäuren besonders bevorzugt sind.

Gegenstand der vorliegenden Erfindung ist daher auch ein Verfahren, bei dem die Komponente (B1) hergestellt wird ausgehend von ungesättigten Fettsäuren, ausgewählt aus der Gruppe bestehend aus ungesättigten C₁₆-Fettsäuren, ungesättigten C₁₈-Fettsäuren und ungesättigten C₂₀-Fettsäuren.

Eine geeignete ungesättigte C₁₆-Fettsäure ist beispielsweise Palmitoleinsäure ((9Z)-Hexadeca-9-ensäure).

Geeignete ungesättigte C₁₈-Fettsäuren sind beispielsweise ausgewählt aus der Gruppe bestehend aus Petroselinsäure ((6Z)-Oktadeka-6-ensäure), Ölsäure ((9Z)-Oktadeka-9-ensäure), Elaidinsäure ((9E)-Oktadeka-9-ensäure), Vaccensäure ((11E)-Oktadeka-11-ensäure), Linolsäure ((9Z,12Z)-Oktadeka-9,12-diensäure), α-Linolensäure ((9Z, 12Z, 15Z)-Oktadeka-9, 12, 15-triensäure), γ-Linolensäure ((6Z,9Z,12Z)-Oktadeka-6,9,12-triensäure), Calendulasäure ((8E,10E,12Z)-Oktadeka-8,10,12-triensäure), Punicinsäure ((9Z,11E,13Z)-Oktadeka-9,11,13-triensäure), α-Elaeostearinsäure ((9Z,11E,13E)-Oktadeka-9,11,13-triensäure) und β-Elaeostearinsäure ((9E,11E,13E)-Oktadeka-9,11,13-triensäure). Besonders bevorzugt sind ungesättigte C₁₈-Fettsäuren ausgewählt aus der Gruppe bestehend aus Petroselinsäure ((6Z)-Oktadeka-6-ensäure), Ölsäure ((9Z)-Oktadeka-9-ensäure), Elaidinsäure ((9E)-Oktadeka-9-ensäure), Vaccensäure ((11E)-Oktadeka-11-ensäure), Linolsäure ((9Z,12Z)-Oktadeka-9,12-diensäure).

Geeignete ungesättigte C₂₀-Fettsäuren sind beispielsweise ausgewählt aus der Gruppe bestehend aus Gadoleinsäure ((9Z)-Eicosa-9-ensäure), Icosensäure ((11Z)-Eicosa-11-ensäure), Arachidonsäure ((5Z,8Z, 11Z, 14Z)-Eicosa-5,8, 11, 14-tetraensäure) und Timnodonsäure ((5Z,8Z,11Z,14Z,17Z)-Eicosa-5,8,11,14,17-pentaensäure).

Die Komponente (B1) ist insbesondere bevorzugt mindestens eine C₃₆-Dimersäure.

Die mindestens eine C₃₆-Dimersäure wird bevorzugt hergestellt ausgehend von ungesättigten C₁₈-Fettsäuren. Besonders bevorzugt wird die C₃₆-Dimersäure hergestellt ausgehend von C₁₈-Fettsäuren, ausgewählt aus der Gruppe bestehend aus Petroselinsäure ((6Z)-Oktadeka-6-ensäure), Ölsäure ((9Z)-Oktadeka-9-ensäure), Elaidinsäure ((9E)-Oktadeka-9-ensäure), Vaccensäure ((11E)-Oktadeka-11-ensäure) und Linolsäure ((9Z, 12Z)-Oktadeka-9, 12-diensäure).

Bei der Herstellung der Komponente (B1) aus ungesättigten Fettsäuren können sich zudem Trimersäuren bilden, außerdem können Reste an nicht reagierter ungesättigter Fettsäure übrig bleiben.

Die Bildung von Trimersäuren ist dem Fachmann bekannt.

Erfindungsgemäß bevorzugt enthält die Komponente (B1) höchstens 0,5 Gew.-% nicht reagierter ungesättigter Fettsäure und höchstens 0,5 Gew.-% Trimersäure, besonders bevorzugt höchstens 0,2 Gew.-% nicht reagierter ungesättigter Fettsäure und höchstens 0,2 Gew.-% Trimersäure, jeweils bezogen auf das Gesamtgewicht der Komponente (B1).

Als Dimersäuren (auch bekannt als dimerisierte Fettsäuren oder Dimerfettsäuren) werden allgemein und insbesondere im Rahmen der vorliegenden Erfindung also Gemische bezeichnet, die durch Oligomerisierung von ungesättigten Fettsäuren hergestellt werden. Sie sind beispielsweise herstellbar durch katalytische Dimerisierung von pflanzlichen, ungesättigten Fettsäuren, wobei als Ausgangsstoffe insbesondere ungesättigte C₁₆- bis C₂₀-Fettsäuren eingesetzt werden. Die Verknüpfung verläuft vornehmlich nach dem Diels-Alder-Typ und es resultieren, je nach Zahl und Lage der Doppelbindungen der zur Herstellung der Dimersäuren eingesetzten Fettsäuren, Gemische aus vornehmlich dimeren Produkten, die zwischen den Carboxylgruppen cycloaliphatische, linear-aliphatische, verzweigt aliphatische und auch C₆-aromatische Kohlenwasserstoffgruppen aufweisen. Je nach Mechanismus und/oder gegebenenfalls nachträglicher Hydrierung können die aliphatischen Reste gesättigt oder ungesättigt sein und auch der Anteil von aromatischen Gruppen kann variieren. Die Reste zwischen den Carbonsäuregruppen enthalten dann beispielsweise 32 bis 40 Kohlenstoffatome. Bevorzugt werden zur Herstellung Fettsäuren mit 18 Kohlenstoffatomen eingesetzt, sodass das dimere Produkt also 36 Kohlenstoffatome aufweist. Vorzugsweise weisen die Reste, welche die Carboxylgruppen der Dimerfettsäuren verbinden, keine ungesättigten Bindungen und keine aromatischen Kohlenwasserstoffreste auf.

Im Sinne der vorliegenden Erfindung werden bei der Herstellung also bevorzugt C₁₈-Fettsäuren eingesetzt. Besonders bevorzugt werden Linolen-, Linol- und/oder Ölsäure eingesetzt.

In Abhängigkeit von der Reaktionsführung entstehen bei der oben bezeichneten Oligomerisierung Gemische, die hauptsächlich dimere, aber auch trimere Moleküle sowie monomere Moleküle und sonstige Nebenprodukte enthalten. Üblicherweise wird destillativ gereinigt. Handelsübliche Dimersäuren enthalten im Allgemeinen mindestens 80 Gew.-% dimere Moleküle, bis zu 19 Gew.-% trimere Moleküle und maximal 1 Gew. % monomerer Moleküle und sonstiger Nebenprodukte.

Es ist bevorzugt, Dimersäuren einzusetzen, die zu mindestens 90 Gew.-%, bevorzugt zu mindestens 95 Gew.-%, ganz besonders bevorzugt zu mindestens 98 Gew.-% aus dimeren Fettsäuremolekülen bestehen.

Die Bestimmung der Anteile von monomeren, dimeren und trimeren Molekülen sowie sonstigen Nebenprodukten in den Dimersäuren kann beispielsweise mittels Gaschromatografie (GC) erfolgen. Dabei werden die Dimersäuren vor der GC- Analyse über die Bortrifluorid-Methode zu den entsprechenden Methylestern umgesetzt (vergleiche DIN EN ISO 5509) und dann mittels GC analysiert.

Als grundlegendes Kennzeichen für "Dimersäuren" gilt im Rahmen der vorliegenden Erfindung also, dass deren Herstellung die Oligomerisierung von ungesättigten Fettsäuren umfasst. Bei dieser Oligomerisierung entstehen vornehmlich, das heißt bevorzugt, zu mindestens 80 Gew.-%, besonders bevorzugt zu mindestens 90 Gew.-%, ganz besonders bevorzugt zu mindestens 95 Gew.-% und insbesondere zu mindestens 98 Gew.-% dimere Produkte. Die Tatsache, dass bei der Oligomerisierung also überwiegend dimere Produkte entstehen, die genau zwei Fettsäuremoleküle enthalten, rechtfertigt diese ohnehin gängige Benennung. Ein alternativer Ausdruck für den einschlägigen Begriff "Dimersäuren" ist also "Gemisch enthaltend dimerisierte Fettsäuren".

Die einzusetzenden Dimersäuren sind als Handelsprodukte zu erhalten. Zu nennen sind beispielsweise Radiacid 0970, Radiacid 0971, Radiacid 0972, Radiacid 0975, Radiacid 0976 und Radiacid 0977 der Firma Oleon, Pripol 1006, Pripol 1009, Pripol 1012, und Pripol 1013 der Firma Croda, Empol 1008, Empol 1012, Empol 1061 und Empol 1062 der Firma BASF SE sowie Unidyme 10 und Unidyme TI der Firma Arizona Chemical.

Die Komponente (B1) weist beispielsweise eine Säurezahl im Bereich von 190 bis 200 mg KOH/g auf.

### Komponente (B2)

Die Komponente (B2) ist erfindungsgemäß mindestens ein C₄-C₁₂-Diamin.

"Mindestens ein C₄-C₁₂-Diamin" bedeutet im Rahmen der vorliegenden Erfindung sowohl genau ein C₄-C₁₂-Diamin als auch eine Mischung aus zwei oder mehreren C₄-C₁₂-Diaminen.

Unter "C₄-C₁₂-Diamin" werden im Rahmen der vorliegenden Verbindung aliphatische und/oder aromatische Verbindungen mit vier bis zwölf Kohlenstoffatomen und zwei Aminogruppen (-NH₂-Gruppen) verstanden. Die aliphatischen und/oder aromatischen Verbindungen können unsubstituiert oder zusätzlich zumindest monosubstituiert sein. Für den Fall, dass die aliphatischen und/oder aromatischen Verbindungen zusätzlich zumindest monosubstituiert sind, können sie ein, zwei oder mehrere Substituenten tragen, die an der Polymerisation der Komponenten (A) und (B) nicht teilnehmen. Derartige Substituenten sind beispielsweise Alkyl- oder Cycloalkylsubstituenten. Diese sind dem Fachmann als solche bekannt. Bevorzugt ist das mindestens eine C₄-C₁₂-Diamin unsubstituiert.

Geeignete Komponenten (B2) sind beispielsweise ausgewählt aus der Gruppe bestehend aus 1,4-Diaminobutan (Butan-1,4-diamin; Tetramethylendiamin; Putrescin), 1,5-Diaminopentan (Pentamethylendiamin; Pentan-1,5-diamin; Cadaverin), 1,6-Diaminohexan (Hexamethylendiamin; Hexan-1,6-diamin), 1,7-Diaminoheptan, 1,8-Diaminoctan, 1,9-Diaminononan, 1,10-Diaminodekan (Dekamethylendiamin), 1,11-Diaminoundekan (Undekamethylendiamin) und 1,12-Diaminododekan (Dodekamethylendiamin).

Bevorzugt ist die Komponente (B2) ausgewählt aus der Gruppe bestehend aus Tetramethylendiamin, Pentamethylendiamin, Hexamethylendiamin, Dekamethylendiamin und Dodekamethylendiamin.

Gegenstand der vorliegenden Erfindung ist daher auch ein Verfahren, bei dem die Komponente (B2) ausgewählt ist aus der Gruppe bestehend aus Tetramethylendiamin, Pentamethylendiamin, Hexamethylendiamin, Decamethylendiamin und Dodecamethylendiamin.

### Komponente (B3)

Die gegebenenfalls in der Komponente (B) enthaltene Komponente (B3) ist erfindungsgemäß mindestens eine C₄-C₂₀-Disäure.

"Mindestens eine C₄-C₂₀-Disäure" bedeutet im Rahmen der vorliegenden Erfindung sowohl genau eine C₄-C₂₀-Disäure als auch eine Mischung aus zwei oder mehreren C₄-C₂₀-Disäuren.

Unter "C₄-C₂₀-Disäure" werden im Rahmen der vorliegenden Erfindung aliphatische und/oder aromatische Verbindungen mit zwei bis achtzehn Kohlenstoffatomen und zwei Carboxygruppen (-COOH-Gruppen) verstanden. Die aliphatischen und/oder aromatischen Verbindungen können unsubstituiert oder zusätzlich zumindest monosubstituiert sein. Für den Fall, dass die aliphatischen und/oder aromatischen Verbindungen zusätzlich zumindest monosubstituiert sind, können sie ein, zwei oder mehrere Substituenten tragen, die an der Polymerisation der Komponenten (A) und (B) nicht teilnehmen. Derartige Substituenten sind beispielsweise Alkyl- oder Cycloalkylsubstituenten. Diese sind dem Fachmann bekannt. Bevorzugt ist die mindestens eine C₄-C₂₀-Disäure unsubstituiert.

Geeignete Komponenten (B3) sind beispielsweise ausgewählt aus der Gruppe bestehend aus Butandisäure (Bernsteinsäure), Pentandisäure (Glutarsäure), Hexandisäure (Adipinsäure), Heptandisäure (Pimelinsäure), Oktandisäure (Korksäure, Suberinsäure), Nonandisäure (Azelainsäure), Dekandisäure (Sebacinsäure), Undekandisäure, Dodekandisäure, Tridekandisäure, Tetradekandisäure und Hexadekandisäure.

Bevorzugt ist die Komponente (B3) ausgewählt aus der Gruppe bestehend aus Pentandisäure (Glutarsäure), Hexandisäure (Adipinsäure), Dekandisäure (Sebacinsäure) und Dodekandisäure.

### Schritt ii)

In Schritt ii) wird das in Schritt i) bereitgestellte mindestens eine Copolyamid in geschmolzener Form aus dem ersten Extruder durch eine Ringdüse extrudiert unter Erhalt eines Schlauchs, der das mindestens eine Copolyamid in geschmolzener Form enthält.

"Eine Ringdüse" bedeutet im Rahmen der vorliegenden Erfindung sowohl genau eine Ringdüse als auch zwei oder mehrere Ringdüsen. Erfindungsgemäß bevorzugt ist genau eine Ringdüse.

Als Ringdüsen eignen sich alle dem Fachmann bekannten Ringdüsen, die es ermöglichen, einen Schlauch aus dem mindestens einen Copolyamid in geschmolzener Form zu extrudieren. Geeignete Ringdüsen sind dem Fachmann als solche bekannt.

Wird in einer bevorzugten Ausführungsform der vorliegenden Erfindung der weiter unten beschriebenen Schritt i1) durchgeführt, so ist es bevorzugt, dass in Schritt ii) das mindestens eine Copolyamid in geschmolzener Form aus dem ersten Extruder mit dem weiter unten beschriebenen mindestens einen weiteren Polymer (wP) in geschmolzener Form aus dem weiteren Extruder in der Ringdüse zusammengeführt wird.

Insbesondere bevorzugt werden in Schritt ii) das mindestens eine Copolyamid in geschmolzener Form aus dem ersten Extruder mit dem mindestens einen weiteren Polymer (wP) in geschmolzener Form aus dem weiteren Extruder so in der Düse zusammengeführt, dass der in Schritt ii) erhaltene Schlauch, der das mindestens eine Copolyamid in geschmolzener Form enthält, mindestens eine erste Schicht enthält, die das mindestens eine Copolyamid in geschmolzener Form enthält, und mindestens eine weitere Schicht enthält, die das mindestens eine weitere Polymer (wP) in geschmolzener Form enthält.

Beispielsweise liegt die Dicke des Schlauchs, der das mindestens eine Copolyamid in geschmolzener Form enthält, im Bereich von 10 bis 1 mm, bevorzugt im Bereich von 20 bis 700 µm und insbesondere bevorzugt im Bereich von 50 bis 500 µm.

Gegenstand der vorliegenden Erfindung ist daher auch ein Verfahren, bei dem der in Schritt ii) erhaltene Schlauch eine Dicke im Bereich von 10 µm bis 1 mm aufweist.

### Schritt iii)

In Schritt iii) wird der in Schritt ii) erhaltene Schlauch, der das mindestens eine Copolyamid in geschmolzener Form enthält, in einem Wasserbad auf eine erste Temperatur (T₁) abgekühlt, wobei das mindestens eine Copolyamid erstarrt unter Erhalt eines ersten Schlauchfilms, der das mindestens eine Copolyamid enthält.

Die erste Temperatur (T₁), auf die der Schlauch abgekühlt wird, liegt beispielsweise unterhalb der Schmelztemperatur (T_{M(C)}) des mindestens einen Copolyamids, bevorzugt liegt die Temperatur (T₁) unterhalb der Glasübergangstemperatur (T_{G(C)}) des mindestens einen Copolyamids.

Beispielsweise liegt die erste Temperatur (T₁) in Schritt iii) im Bereich von 5 bis 50 °C, bevorzugt im Bereich von 10 bis 45 °C und insbesondere bevorzugt im Bereich von 15 bis 40 °C.

Gegenstand der vorliegenden Erfindung ist daher auch ein Verfahren, bei dem die erste Temperatur (T₁) in Schritt iii) im Bereich von 5 bis 50 °C liegt.

Das Wasserbad enthält Wasser. Das Wasserbad kann darüber hinaus weitere Komponenten wie beispielsweise Alkohole enthalten.

Erfindungsgemäß bevorzugt besteht das Wasserbad aus Wasser.

Die Temperatur des Wasserbades in Schritt iii) liegt beispielsweise im Bereich von 5 bis 70 °C, bevorzugt im Bereich von 10 bis 50 °C und insbesondere bevorzugt im Bereich von 15 bis 40 °C.

Die Schritte ii) und iii) können nacheinander oder gleichzeitig durchgeführt werden. Es versteht sich von selbst, dass wenn die Schritte ii) und iii) gleichzeitig durchgeführt werden, der Schlauch, der das mindestens eine Copolyamid in geschmolzener Form enthält, nur kurzzeitig und intermediär erhalten wird. Üblicherweise wird dann bei der Extrusion in Schritt ii) das mindestens eine Copolyamid in geschmolzener Form direkt als Schlauch in das Wasserbad in Schritt iii) extrudiert und darin abgekühlt und das mindestens eine Copolyamid erstarrt unter Erhalt des ersten Schlauchfilms.

Der Schlauch, der das mindestens eine Copolyamid enthält, wird während des Abkühlens in Schritt iii) über ein erstes Rollensystem geführt. Dabei wird der Schlauch in seiner Länge verstreckt.

Gegenstand der vorliegenden Erfindung ist daher ein Verfahren, bei dem der Schlauch, der das mindestens eine Copolyamid enthält, während des Abkühlens in Schritt iii) über ein erstes Rollensystem geführt wird, wobei der Schlauch in seiner Länge verstreckt wird.

Beim Verstrecken des Schlauchs richten sich die Polymerketten des mindestens einen Copolyamids aus und die Kristallinität des mindestens einen Copolyamids kann sich erhöhen. Dieses Verfahren ist dem Fachmann bekannt.

Es ist darüber hinaus möglich, dass sich auch die Polymerketten des gegebenenfalls in dem Schlauch enthaltenen mindestens einen weiteren Polymers (wP) beim Verstrecken ausrichten. Dadurch kann auch die Kristallinität des mindestens einen weiteren Polymers (wP) sich erhöhen.

Wird der Schlauch in seiner Länge verstreckt, so bedeutet dies, dass der Schlauch in Extrusionsrichtung verstreckt wird. Die Polymerketten des mindestens einen Copolyamids sowie gegebenenfalls des mindestens einen weiteren Polymers (wP) richten sich parallel zu der Richtung, in die verstreckt wird, aus.

### Schritt iv)

In Schritt iv) wird der in Schritt iii) erhaltene erste Schlauchfilm auf eine zweite Temperatur (T₂) erwärmt unter Erhalt eines erwärmten ersten Schlauchfilms, der das mindestens eine Copolyamid enthält.

Das Erwärmen des ersten Schlauchfilms kann nach allen dem Fachmann bekannten Methoden erfolgen, beispielsweise durch Infrarotstrahler oder einen um den Schlauch liegenden Heizring.

Die zweite Temperatur (T₂), auf die der erste Schlauchfilm erwärmt wird, liegt bevorzugt oberhalb der Glasübergangstemperatur (T_{G(C)}) des mindestens einen Copolyamids. Es ist darüber hinaus bevorzugt, dass die zweite Temperatur (T₂) unterhalb der Schmelztemperatur (T_{M(C)}) des mindestens einen Copolyamids liegt.

Gegenstand der vorliegenden Erfindung ist daher auch ein Verfahren, bei dem das mindestens eine Copolyamid eine Glasübergangstemperatur (T_{G(C)}) und eine Schmelztemperatur (T_{M(C)}) aufweist, und die zweite Temperatur (T₂) in Schritt iv) oberhalb der Glasübergangstemperatur (T_{G(C)}) und unterhalb der Schmelztemperatur (T_{M(C)}) des mindestens einen Copolyamids liegt.

Beispielsweise liegt die zweite Temperatur (T₂) in Schritt iv) im Bereich von 50 bis 200 °C, bevorzugt im Bereich von 60 bis 190 °C und insbesondere bevorzugt im Bereich von 70 bis 180 °C.

Gegenstand der vorliegenden Erfindung ist daher auch ein Verfahren, bei dem in Schritt iv) der in Schritt iii) erhaltene erste Schlauchfilm auf eine zweite Temperatur (T₂) erwärmt wird, die im Bereich von 50 bis 200 °C liegt.

Es versteht sich von selbst, dass die zweite Temperatur (T₂), auf die der erste Schlauchfilm in Schritt iv) erwärmt wird, oberhalb der ersten Temperatur (T₁) liegt, auf die der Schlauch in Schritt iii) abgekühlt wird.

### Schritt v)

In Schritt v) wird in den in Schritt iv) erhaltenen erwärmten ersten Schlauchfilm Luft eingeblasen, wobei der erwärmte erste Schlauchfilm in seiner Breite verstreckt wird und wobei der erwärmte erste Schlauchfilm auf eine dritte Temperatur (T₃) abkühlt unter Erhalt des Polymerfilms (P), der das mindestens eine Copolyamid enthält.

Unter "Luft" wird im Rahmen der vorliegenden Erfindung das Gasgemisch der Erdatmosphäre verstanden.

In einer weiteren Ausführungsform der vorliegenden Erfindung wird in Schritt v) in den in Schritt iv) erhaltenen erwärmten ersten Schlauchfilm mindestens ein Gas ausgewählt aus der Gruppe bestehend aus Stickstoff, Argon und Kohlenstoffdioxid eingeblasen.

Das Einblasen von Luft in den in Schritt iv) erhaltenen erwärmten ersten Schlauchfilm kann nach allen dem Fachmann bekannten Methoden erfolgen.

Der erwärmte erste Schlauchfilm wird dabei in seiner Breite verstreckt. Dies bedeutet, dass er senkrecht zur Extrusionsrichtung verstreckt wird.

Während Schritt v) kann der erwärmte erste Schlauchfilm zusätzlich über ein zweites Rollensystem geführt werden, wobei der erwärmte erste Schlauchfilm zusätzlich in seiner Länge verstreckt wird.

Gegenstand der vorliegenden Erfindung ist daher auch ein Verfahren, bei dem der erwärmte erste Schlauchfilm, der das mindestens eine Copolyamid enthält, während des Einblasens von Luft in Schritt v) über ein zweites Rollensystem geführt wird, wobei der erwärmte erste Schlauchfilm in seiner Länge verstreckt wird.

Wenn der erwärmte erste Schlauchfilm während Schritt v) über ein zweites Rollensystem geführt wird und/oder der Schlauch während des Abkühlens in Schritt iii) über ein erstes Rollensystem geführt wird, so ist der in Schritt v) erhaltene Polymerfilm (P) ein Polymerfilm (P), der sowohl in seiner Extrusionsrichtung als auch senkrecht dazu verstreckt ist. Es handelt sich dann um einen biaxial orientierten Polymerfilm (P).

"Biaxial orientiert" bedeutet, dass die Polymerketten im Wesentlichen in zwei verschiedene, bevorzugt senkrecht zueinander stehenden Richtungen ausgerichtet sind.

In Schritt v) kühlt der erste Schlauchfilm auf eine dritte Temperatur (T₃) ab. Das Abkühlen auf die dritte Temperatur (T₃) kann allein durch das Einblasen von Luft in den erwärmten ersten Schlauchfilm erfolgen. Darüber hinaus ist es möglich, dass der erwärmte erste Schlauchfilm während Schritt v) zusätzlich abgekühlt wird.

Die dritte Temperatur (T₃), auf die der erwärmte erste Schlauchfilm abgekühlt wird, liegt vorzugsweise unterhalb der Glasübergangstemperatur (T_{G(C)}) des mindestens einen Copolyamids.

Beispielsweise liegt die dritte Temperatur (T₃) im Bereich von 5 bis 50 °C, bevorzugt im Bereich von 10 bis 45 °C und insbesondere bevorzugt im Bereich von 15 bis 40 °C.

Es versteht sich von selbst, dass die dritte Temperatur (T₃), auf die der erwärmte erste Schlauchfilm in Schritt v) abgekühlt wird, unterhalb der zweiten Temperatur (T₂) liegt, auf die der erste Schlauchfilm in Schritt iv) erwärmt wird.

Erfindungsgemäß bevorzugt werden im Anschluss an Schritt v) die folgenden Schritte durchgeführt:
vi) Führen des in Schritt v) erhaltenen Polymerfilms (P) über mindestens eine dritte Rolle,
vii) Erwärmen des in Schritt v) erhaltenen Polymerfilms (P) auf eine vierte Temperatur (T₄), die oberhalb der Glasübergangstemperatur (T_{G(C)}) des mindestens einen Copolyamids liegt, unter Erhalt eines erwärmten Polymerfilms (P),
viii) Führen des in Schritt vii) erhaltenen erwärmten Polymerfilms (P) über mindestens eine vierte Rolle,
wobei der erwärmte Polymerfilm (P) zwischen Schritt vii) und Schritt viii), während Schritt viii) und/oder im Anschluss an Schritt viii) auf eine fünfte Temperatur (Ts), die unterhalb der Glasübergangstemperatur (T_{G(C)}) des mindestens einen Copolyamids liegt, abgekühlt wird.

Gegenstand der vorliegenden Erfindung ist daher auch ein Verfahren, bei dem im Anschluss an Schritt v) die folgenden Schritte durchgeführt werden:
vi) Führen des in Schritt v) erhaltenen Polymerfilms (P) über mindestens eine dritte Rolle,
vii) Erwärmen des in Schritt v) erhaltenen Polymerfilms (P) auf eine vierte Temperatur (T₄), die oberhalb der Glasübergangstemperatur (T_{G(C)}) des mindestens einen Copolyamids liegt, unter Erhalt eines erwärmten Polymerfilms (P),
viii) Führen des in Schritt vii) erhaltenen erwärmten Polymerfilms (P) über mindestens eine vierte Rolle, unter Erhalt des Polymerfilms (P)
wobei der erwärmte Polymerfilm (P) zwischen Schritt vii) und Schritt viii), während Schritt viii) und/oder im Anschluss an Schritt viii) auf eine fünfte Temperatur (Ts), die unterhalb der Glasübergangstemperatur (T_{G(C)}) des mindestens einen Copolyamids liegt, abgekühlt wird.

Die Schritte vi) bis viii), die gegebenenfalls im Anschluss an Schritt v) durchgeführt werden, werden auch als "annealing" bezeichnet.

In Schritt vi) wird der Polymerfilm (P) über mindestens eine dritte Rolle geführt.

"Mindestens eine dritte Rolle" bedeutet im Rahmen der vorliegenden Erfindung sowohl genau eine dritte Rolle als auch ein drittes Rollensystem.

Bevorzugt wird der Polymerfilm (P) in Schritt vi) über ein drittes Rollensystem geführt.

Geeignete dritte Rollen sind dem Fachmann bekannt. Ebenso sind dem Fachmann geeignete dritte Rollensysteme bekannt.

Die mindestens eine dritte Rolle weist üblicherweise eine erste Umdrehungsgeschwindigkeit auf.

In einer Ausführungsform der vorliegenden Erfindung, werden die Schritte v) und vi) gleichzeitig durchgeführt. Dann wird in Schritt v) der erwärme erste Schlauchfilm zusätzlich über ein zweites Rollensystem geführt und das zweite Rollensystem ist gleich der mindestens dritten Rolle, über die der Polymerfilm (P) in Schritt vi) geführt wird.

Gegenstand der vorliegenden Erfindung ist daher auch ein Verfahren, bei dem der erwärmte erste Schlauchfilm, der das mindestens eine Copolyamid enthält, während des Einblasens von Luft in Schritt v) über ein zweites Rollensystem geführt wird, wobei der erwärmte erste Schlauchfilm in seiner Länge verstreckt wird, und im Anschluss an Schritt v) die folgenden Schritte durchgeführt werden
vii) Erwärmen des in Schritt v) erhaltenen Polymerfilms (P) auf eine vierte Temperatur (T₄), die oberhalb der Glasübergangstemperatur (T_{G(C)}) des mindestens einen Copolyamids liegt, unter Erhalt eines erwärmten Polymerfilms (P),
viii) Führen des in Schritt vii) erhaltenen erwärmten Polymerfilms (P) über mindestens eine vierte Rolle, unter Erhalt des Polymerfilms (P)
wobei der erwärmte Polymerfilm (P) zwischen Schritt vii) und Schritt viii), während Schritt viii) und/oder im Anschluss an Schritt viii) auf eine fünfte Temperatur (T₅), die unterhalb der Glasübergangstemperatur (T_{G(C)}) des mindestens einen Copolyamids liegt, abgekühlt wird.

In Schritt vii) wird der Polymerfilm (P) auf eine vierte Temperatur (T₄) erwärmt.

Das Erwärmen erfolgt bevorzugt nachdem der Polymerfilm (P) in Schritt vi) über die mindestens eine dritte Rolle geführt worden ist. Wenn der erwärmte erste Schlauchfilm während Schritt v) über ein zweites Rollensystem geführt wird und die mindestens eine dritte Rolle gleich dem zweiten Rollensystem ist, wird das Erwärmen bevorzugt nach dem Führen über das zweite Rollensystem durchgeführt.

Das Erwärmen des erhaltenen Polymerfilms (P) auf die vierte Temperatur (T₄) in Schritt vii) kann nach allen dem Fachmann bekannten Methoden erfolgen.

Die vierte Temperatur (T₄) liegt erfindungsgemäß oberhalb der Glasübergangstemperatur (T_{G(C)}) des mindestens einen Copolyamids. Es ist darüber hinaus bevorzugt, dass die vierte Temperatur (T₄) unterhalb der Schmelztemperatur (T_{M(C)}) des mindestens einen Copolyamids liegt.

Gegenstand der vorliegenden Erfindung ist daher auch ein Verfahren, bei dem die vierte Temperatur (T₄) unterhalb der Schmelztemperatur (T_{M(C)}) des mindestens einen Copolyamids liegt.

Es versteht sich von selbst, dass die vierte Temperatur (T₄), auf die der Polymerfilm (P) gegebenenfalls in Schritt vii) erwärmt wird, oberhalb der dritten Temperatur (T₃) liegt, auf die der erwärmte erste Schlauchfilm in Schritt v) abgekühlt wird.

In Schritt viii) wird der erwärmte Polymerfilm (P) über mindestens eine vierte Rolle geführt.

"Mindestens eine vierte Rolle" bedeutet im Rahmen der vorliegenden Erfindung sowohl genau eine vierte Rolle als auch ein viertes Rollensystem.

Die mindestens eine vierte Rolle weist üblicherweise eine zweite Umdrehungsgeschwindigkeit auf.

Erfindungsgemäß bevorzugt ist die erste Umdrehungsgeschwindigkeit der mindestens einen dritten Rolle höher als die zweite Umdrehungsgeschwindigkeit der mindestens einen vierten Rolle.

Der erwärmte Polymerfilm (P) wird zwischen Schritt vii) und Schritt viii), während Schritt viii) und/der im Anschluss an Schritt viii) auf eine fünfte Temperatur (T₅) abgekühlt. Die fünfte Temperatur (T₅) liegt unterhalb der Glasübergangstemperatur (T_{G(C)}) des mindestens einen Copolyamids.

Es versteht sich von selbst, dass die fünfte Temperatur (T₅) unterhalb der vierten Temperatur (T₄) liegt.

Das Abkühlen auf die fünfte Temperatur (T₅) kann nach allen dem Fachmann bekannten Methoden erfolgen, beispielsweise durch Kühlung mittels Luft.

Indem die Schritte vi) bis viii) durchgeführt werden, wird ein Polymerfilm (P) erhalten, der einen besonders niedrigen Vorschrumpf aufweist. Der Polymerfilm (P) schrumpft also zwischen seiner Herstellung und seiner Verwendung, beispielsweise als Verpackungsfilm, nicht oder nur in geringem Ausmaß. Entsprechendes gilt, wenn der erwärmte erste Schlauchfilm in Schritt v) über ein zweites Rollensystem geführt wird und anschließend die Schritte vi) bis viii) durchgeführt werden.

### Polymerfilm (P)

Der erfindungsgemäß hergestellte Polymerfilm (P) enthält das mindestens eine Copolyamid.

Der Polymerfilm (P) weist beispielsweise eine Dicke im Bereich von 0,1 µm bis 1 mm auf, bevorzugt eine Dicke im Bereich von 5 bis 500 µm und insbesondere bevorzugt im Bereich von 20 bis 100 µm.

Gegenstand der vorliegenden Erfindung ist daher auch ein Verfahren, bei dem der Polymerfilm (P) eine Dicke im Bereich von 0,1 µm bis < 1 mm aufweist.

Der Polymerfilm (P) kann zusätzlich zu dem mindestens einen Copolyamid mindestens ein weiteres Polymer (wP) enthalten.

"Mindestens ein weiteres Polymer (wP)" bedeutet im Rahmen der vorliegenden Erfindung sowohl genau ein weiteres Polymer (wP) als auch eine Mischung aus zwei oder mehreren weiteren Polymeren (wP).

Als mindestens ein weiteres Polymer (wP) eignen sich alle dem Fachmann bekannten Polymere. Es versteht sich von selbst, dass das mindestens eine weitere Polymer (wP) von dem mindestens einen Copolyamid verschieden ist.

Bevorzugt ist das mindestens eine weitere Polymer (wP) ausgewählt aus der Gruppe bestehend aus Polyolefinen, Poly(ethylvinylalkoholen), Poly(ethylvinylacetaten), Polyethylenterephthalaten, Polyvinylidenchloriden, mit Maleinsäureanhydrid gegrafteten Polyolefinen, Polyestern und Ionomeren.

Besonders bevorzugt ist das mindestens eine weitere Polymer (wP) ausgewählt aus der Gruppe bestehend aus Polyolefinen, Poly(ethylvinylalkoholen), Poly(ethylvinylacetaten), Polyethylenterephthalaten, Polyvinylidenchloriden und mit Maleinsäureanhydrid gegraften Polyolefinen.

Am meisten bevorzugt ist das mindestens eine weitere Polymer (wP) ausgewählt aus der Gruppe bestehend aus Polyolefinen, mit Maleinsäureanhydrid gegrafteten Polyolefinen und Ethylvinylalkoholen.

Ist das mindestens eine weitere Polymer (wP) ausgewählt aus der Gruppe bestehend aus Polyolefinen, so ist es bevorzugt, dass zusätzlich mit Maleinsäureanhydrid gegraftete Polyolefine als mindestens ein weiteres Polymer (wP) eingesetzt werden. Dabei ist es möglich, dass als das mindestens eine weitere Polymer (wP) eine Mischung aus Polyolefinen und mit Maleinsäureanhydrid gegrafteten Polyolefinen eingesetzt wird. Ebenso ist es möglich, dass, wenn der Polymerfilm (P) ein weiter unten beschriebener Multilayerfilm ist, der Polymerfilm (P) mindestens eine erste weitere Schicht mindestens eines weiteren Polymers (wP) enthält, wobei das mindestens eine weitere Polymer (wP) der ersten weiteren Schicht ausgewählt ist aus der Gruppe bestehend aus mit Maleinsäureanhydrid gegrafteten Polyolefinen und der Polymerfilm (P) mindestens eine zweite weitere Schicht mindestens eines weiteren Polymers (wP) enthält, wobei das mindestens eine weitere Polymer (wP) der zweiten weiteren Schicht ausgewählt ist aus der Gruppe bestehend aus Polyolefinen. Der Polymerfilm (P) enthält die erste weitere Schicht dann vorzugsweise zwischen der ersten Schicht, die das mindestens eine Copolyamid enthält, und der zweiten weiteren Schicht.

Polyolefine als solche sind dem Fachmann bekannt. Bevorzugte Polyolefine sind Polypropylen (PP), Low-Density-Polyethylen (LDPE), Linear-Low-Density-Polyethylen (LLDPE) und Very-Low-Density-Polyethylen (VLDPE).

Linear-Low-Density-Polyethylen (LLDPE) ist ein Copolymer aus Ethylen und mindestens einem C₄-C₈-α-Olefin. Linear-Low-Density-Polyethylen (LLDPE) zeichnet sich durch lange Polymerketten mit kurzen Seitenketten aus. Die Länge der Seitenketten in Linear-Low-Density-Polyethylen (LLDPE) ist üblicherweise kürzer als in Low-Density-Polyethylen (LDPE) und in Medium-Density-Polyethylen (MDPE). Der Schmelzpunkt von Linear-Low-Density-Polyethylen (LLDPE) liegt vorzugsweise im Bereich von 110 bis 130 °C, seine Dichte liegt im Bereich von 0,91 bis 0,93 g/cm³.

Very-Low-Density-Polyethylen (VLDPE) sind Copolymere aus Ethylen und mindestens einem C₄-C₈-α-Olefin. Sie weisen üblicherweise einen Schmelzpunkt im Bereich von 110 bis 130 °C und eine Dichte im Bereich von 0,86 bis < 0,91 g/cm³ auf. Der Anteil an C₄-C₈-α-Olefinen in VLDPE ist in der Regel höher als im LLDPE.

Unter "C₄-C₈-α-Olefinen" werden im Rahmen der vorliegenden Erfindung lineare und verzweigte, bevorzugt lineare, Alkylene mit 4 bis 8 Kohlenstoffatomen verstanden, die in α-Position ungesättigt sind, also in α-Stellung eine C-C-Doppelbindung aufweisen. Beispiele hierfür sind 1-Buten, 1-Penten, 1-Hexen, 1-Hepten und 1-Octen. 1-Buten, 1-Hexen und 1-Octen sind bevorzugt.

Bevorzugt als Poly(ethylenvinylacetate) sind Copolymere von Ethylen mit Vinylacetat. Beispielsweise werden im Bereich von 82 bis 99,9 Gew.-% Ethylen und im Bereich von 0,1 bis 18 Gew.-% Vinylacetat, bevorzugt im Bereich von 88 bis 99,9 Gew.-% Ethylen und im Bereich von 0,1 bis 12 Gew.-% Vinylacetat zur Herstellung eingesetzt.

Bevorzugte Poly(ethylenvinylalkohole) sind erhältlich durch vollständige oder teilweise Versefung der vorstehend beschriebenen Poly(ethylenvinylacetate). Beispielsweise enthalten die Poly(ethylenvinylalkohole) im Bereich von 50 bis 75 mol.-% Ethylen und im Bereich von 25 bis 50 mol.-% Vinylalkohol, bezogen auf die Gesamtstoffmenge der Poly(ethylenvinylalkohole).

Der Polymerfilm (P) kann das mindestens eine weitere Polymer (wP) als Blend (Mischung) mit dem mindestens einen Copolyamid enthalten.

Darüber hinaus ist es möglich und erfindungsgemäß bevorzugt, dass der Polymerfilm (P) mindestens eine erste Schicht enthält, die das mindestens eine Copolyamid enthält, und der Polymerfilm (P) mindestens eine weitere Schicht enthält, die das mindestens eine weitere Polymer (wP) enthält.

In dieser Ausführungsform ist es bevorzugt, dass die mindestens eine erste Schicht, die das mindestens eine Copolyamid enthält, kein weiteres Polymer (wP) enthält.

"Mindestens eine erste Schicht" bedeutet im Rahmen der vorliegenden Erfindung sowohl genau eine erste Schicht als auch zwei oder mehrere erste Schichten.

Wie vorstehend bereits beschrieben ergibt sich die Anzahl der ersten Schichten aus der Anzahl an ersten Extrudern, die in Schritt i) der erfindungsgemäßen Verfahrens eingesetzt werden.

"Mindestens eine weitere Schicht" bedeutet im Rahmen der vorliegenden Erfindung sowohl genau eine weitere Schicht als auch zwei oder mehrere weitere Schichten. Zwei oder mehrere weitere Schichten sind bevorzugt.

Wie nachfolgend ausgeführt, ergibt sich die Anzahl der weiteren Schichten aus der Anzahl an weiteren Extrudern, die in einer Ausführungsform des erfindungsgemäßen Verfahrens eingesetzt werden.

Es ist also bevorzugt, dass der Polymerfilm (P) mindestens eine erste Schicht enthält, die das mindestens eine Copolyamid enthält, und der Polymerfilm (P) außerdem mindestens eine weitere Schicht enthält, wobei die mindestens eine weitere Schicht mindestens ein weiteres Polymer (wP), das ausgewählt ist aus der Gruppe bestehend aus Polyolefinen, Poly(ethylenvinylalkoholen), Poly(ethylenvinylacetaten), Polyethylenterephthalaten, Polyvinylidenchloriden und mit Maleinsäureanhydrid gegrafteten Polyolefinen, enthält.

Gegenstand der vorliegenden Erfindung ist somit auch ein Verfahren, bei dem der Polymerfilm (P) mindestens eine erste Schicht enthält, die das mindestens eine Copolyamid enthält, und der Polymerfilm (P) mindestens eine weitere Schicht enthält, wobei die mindestens eine weitere Schicht mindestens ein weiteres Polymer (wP), das ausgewählt ist aus der Gruppe bestehend aus Polyolefinen, Poly(ethylenvinylalkoholen), Poly(ethylenvinylacetaten), Polyethylenterephthalaten, Polyvinylidenchloriden und mit Maleinsäureanhydrid gegrafteten Polyolefinen, enthält.

Enthält der Polymerfilm (P) außer der mindestens einen ersten Schicht keine weitere Schicht, so wird der Polymerfilm (P) auch als "Monofilm" bezeichnet. Ist der Polymerfilm (P) ein Monofilm, so kann er genau eine erste Schicht und keine weitere Schicht enthalten, ebenso ist es möglich, dass er zwei oder mehrere erste Schichten und keine weitere Schicht enthält. Enthält der Polymerfilm (P) zwei oder mehrere erste Schichten und ist er ein Monofilm, so weisen die zwei oder mehreren ersten Schichten alle dieselbe Zusammensetzung auf.

Enthält der Polymerfilm (P) mindestens eine erste Schicht, die das mindestens eine Copolyamid enthält, und mindestens eine weitere Schicht, die das mindestens eine weitere Polymer (wP) enthält, wird der Polymerfilm (P) auch als Multilayerfilm bezeichnet.

Beispielsweise enthält der Polymerfilm (P) dann 1 bis 11 erste Schichten, die das mindestens eine Copolyamid enthalten, und 1 bis 13 weitere Schichten, die das mindestens eine weitere Polymer (wP) enthalten. Bevorzugt enthält der Polymerfilm (P) 1 bis 5 erste Schichten, die das mindestens eine Copolyamid enthalten, und 1 bis 11 weitere Schichten, die das mindestens eine weitere Polymer (wP) enthalten. Insbesondere bevorzugt enthält der Polymerfilm (P) 1 bis 3 erste Schichten, die das mindestens eine Copolyamid enthalten, und 1 bis 7 weitere Schichten, die das mindestens eine weitere Polymer (wP) enthalten.

In einer bevorzugten Ausführungsform der vorliegenden Erfindung besteht die mindestens eine erste Schicht aus dem mindestens einen Copolyamid. Ebenso ist es bevorzugt, dass die mindestens eine weitere Schicht aus dem mindestens einen weiteren Polymer (wP) besteht.

Der Begriff "Polymerfilm (P)" umfasst im Rahmen der vorliegenden Erfindung also sowohl Monofilme als auch Multilayerfilme.

Gegenstand der vorliegenden Erfindung ist daher auch ein Verfahren, bei dem der Polymerfilm (P) ein Monofilm oder ein Multilayerfilm ist.

Wie vorstehend beschrieben, weist der Polymerfilm (P) üblicherweise eine Dicke im Bereich von 0,1 µm bis 1 mm auf, bevorzugt im Bereich von 5 bis 500 µm und insbesondere bevorzugt im Bereich von 10 bis 100 µm.

Ist der Polymerfilm (P) ein Monofilm und enthält er genau eine erste Schicht, so weist die erste Schicht die gleiche Dicke auf wie der Polymerfilm (P), also beispielsweise im Bereich von 0,1 µm bis 1 mm, bevorzugt im Bereich von 5 bis 500 µm und insbesondere bevorzugt im Bereich von 10 bis 100 µm. Ist der Polymerfilm (P) ein Monofilm und enthält er zwei oder mehrere erste Schichten, so ist die Dicke jeder ersten Schicht üblicherweise kleiner als die Dicke des Polymerfilms (P). Die Summe der Dicken der einzelnen ersten Schichten entspricht dann im Allgemeinen der Dicke des Polymerfilms (P). Beispielsweise weist die mindestens eine erste Schicht, die das mindestens eine Copolyamid enthält, dann ein Dicke im Bereich von 0,1 bis 100 µm, bevorzugt im Bereich von 0,5 bis 50 µm und insbesondere bevorzugt im Bereich von 0,5 bis 15 µm auf.

Ist der Polymerfilm (P) ein Multilayerfilm, so ist die Dicke der einzelnen Schichten des Polymerfilms (P), also ist die Dicke der mindestens einen ersten Schicht, die das mindestens eine Copolyamid enthält, und die Dicke der mindestens einer weiteren Schicht, die das mindestens eine weitere Polymer (wP) enthält, üblicherweise kleiner als die Dicke des Polymerfilms (P). Die Summe der Dicken der einzelnen Schichten entspricht dann im Allgemeinen der Dicke des Polymerfilms (P).

Beispielsweise weist die mindestens eine erste Schicht, die das mindestens eine Copolyamid enthält, dann eine Dicke im Bereich von 0,1 bis 100 µm auf, bevorzugt im Bereich von 0,5 bis 50 µm und insbesondere bevorzugt im Bereich von 0,5 bis 15 µm.

Die mindestens eine weitere Schicht, die das mindestens eine weitere Polymer (wP) enthält, weist dann beispielsweise eine Dicke im Bereich von 0,1 bis 100 µm auf, bevorzugt im Bereich von 0,5 bis 50 µm und insbesondere bevorzugt im Bereich von 0,5 bis 15 µm.

Der Polymerfilm (P) kann mindestens einen Haftvermittler enthalten. Diese Ausführungsform ist bevorzugt, wenn der Polymerfilm (P) ein Multilayerfilm ist.

"Mindestens ein Haftvermittler" bedeutet im Rahmen der vorliegenden Erfindung sowohl genau ein Haftvermittler als auch eine Mischung aus zwei oder mehreren Haftvermittlern.

Ist der Polymerfilm (P) ein Multilayerfilm, so kann der mindestens eine Haftvermittler zusammen mit dem mindestens einen Copolyamid in der mindestens einen ersten Schicht enthalten sein. Ebenso ist es möglich, dass der mindestens eine Haftvermittler zusammen mit dem mindestens einen weiteren Polymer (wP) in der mindestens einen weiteren Schicht enthalten ist. Darüber hinaus ist es möglich, dass der mindestens eine Haftvermittler als mindestens eine zusätzliche Schicht in dem Polymerfilm (P) enthalten ist. Diese Ausführungsform ist bevorzugt.

Ist der mindestens eine Haftvermittler als mindestens eine zusätzliche Schicht in dem Polymerfilm (P) enthalten, so wird der mindestens eine Haftvermittler im Erfindungsgemäßen Verfahren üblicherweise in einem zusätzlichen Extruder bereitgestellt und dann aus diesem ebenfalls in Schritt ii) durch die Ringdüse extrudiert.

Wenn der mindestens eine Haftvermittler als mindestens eine zusätzliche Schicht in dem Polymerfilm (P) enthalten ist, so ist diese mindestens eine zusätzliche Schicht bevorzugt zwischen der mindestens einen weiteren Schicht, die das mindestens eine weitere Polymer (wP) enthält, und der mindestens einen ersten Schicht, die das mindestens eine Copolyamid enthält, angeordnet. Die mindestens eine Schicht des Haftvermittlers weist beispielsweise eine Dicke von 0,1 bis 100 µm auf, bevorzugt im Bereich von 0,5 bis 50 µm und insbesondere bevorzugt im Bereich von 0,5 bis 15 µm.

Geeignete Haftvermittler sind dem Fachmann als solche bekannt. Bevorzugt als Haftvermittler sind Copolymere aus Ethylen mit Maleinsäureanhydrid oder ein Copolymer aus Ethylen mit Vinylacetat. Bevorzugt ist ein Copolymer aus Linear-Low-Density-Polyethylen (LLDPE) und Maleinsäureanhydrid oder ein Copolymer aus Ethylen und Vinylacetat, wobei zur Herstellung des Copolymers > 18 Gew.-% Vinylacetat und < 82 Gew.-% Ethylen eingesetzt werden. Diese Copolymere sind kommerziell erhältlich, beispielsweise unter dem Handelsnamen *Bynel 4105* der Firma *DuPont* oder *Escorene FL00119* der Firma *Exxon.*

Bevorzugt sind als Haftvermittler eingesetzte Copolymere aus Ethylen mit Maleinsäureanhydrid mit Maleinsäureanhydrid gegraftete Polymere oder Copolymere aus Ethylen.

Der Polymerfilm (P) kann außerdem Additive enthalten, wenn diese in dem ersten Extruder zusammen mit dem mindestens einen Copolyamid und/oder in dem weiteren Extruder zusammen mit dem mindestens einen weiteren Polyme (wP) bereitgestellt worden sind. Für die Additive gelten die zuvor beschriebenen Ausführungen und Bevorzugungen entsprechend.

Die Additive können sowohl in der mindestens einen ersten Schicht enthalten sein als auch in der mindestens einen weiteren Schicht. Sie können in nur einer dieser Schichten enthalten sein, ebenso ist es möglich, dass sie in jeder dieser Schichten enthalten sind.

Dem Fachmann ist klar, dass wenn die Additive zusammen mit mindestens einen Copolyamid in dem ersten Extruder bereitgestellt werden, die Additive in der ersten Schicht enthalten sind. Werden die Additive zusammen mit dem mindestens einen weiteren Polymer (wP) in dem weiteren Extruder bereitgestellt, so sind die Additive in der weiteren Schicht enthalten.

Gegenstand der vorliegenden Erfindung ist daher auch ein Polymerfilm erhältlich nach dem erfindungsgemäßen Verfahren.

Soll der Polymerfilm (P) mindestens ein weiteres Polymer (wP) enthalten, so umfasst das erfindungsgemäße Verfahren vorzugsweise zusätzlich einen Schritt i1), Bereitstellen mindestens eines weiteren Polymers (wP) in geschmolzener Form in einem weiteren Extruder, wobei der Schritt i1) vor Schritt ii) durchgeführt wird.

Gegenstand der vorliegenden Erfindung ist daher auch ein Verfahren, bei dem zusätzlich der Schritt
i1) Bereitstellen mindestens eines weiteren Polymers (wP) in geschmolzener Form in einem weiteren Extruder,
wobei der Schritt i1) vor Schritt ii) durchgeführt wird.

Besonders bevorzugt wird der Schritt i1) gleichzeitig mit Schritt i) durchgeführt.

Es versteht sich von selbst, dass, wenn der Schritt i1) durchgeführt wird, dann der in Schritt ii) erhaltene Schlauch zusätzlich das weitere Polymer (wP) in geschmolzener Form enthält. Ebenso enthält der in Schritt iii) erhaltene erste Schlauchfilm sowie der in Schritt iv) erhaltene erwärmte erste Schlauchfilm dann zusätzlich das mindestens eine weitere Polymer.

Bevorzugt umfasst das Verfahren zur Herstellung des Polymerfilms (P) dann die Schritte
i) Bereitstellen mindestens eines Copolyamids, hergestellt durch Polymerisation der Komponenten
   (A) 15 bis 84 Gew.-% mindestens eines Lactams,
   (B) 16 bis 85 Gew.-% eines Monomergemischs (M), das die Komponenten
      (B1) mindestens eine C₃₂-C₄₀-Dimersäure und
      (B2) mindestens ein C₄-C₁₂-Diamin
      enthält,
   wobei die Gewichtsprozente der Komponenten (A) und (B) jeweils bezogen sind auf die Summe der Gewichtsprozente der Komponenten (A) und (B) in geschmolzener Form in einem Extruder.
i1) Bereitstellen mindestens eines weiteren Polymers (wP) in geschmolzener Form in einem weiteren Extruder,
ii) Extrusion des in Schritt i) bereitgestellten mindestens einen Copolyamids in geschmolzener Form aus dem ersten Extruder durch eine Ringdüse und Extrusion des in Schritt i1) bereitgestellten mindestens einen weiteren Polymers (wP) in geschmolzener Form aus dem weiteren Extruder durch die Ringdüse unter Erhalt eines Schlauchs, der das mindestens eine Copolyamid und das mindestens eine weitere Polymer (wP) jeweils in geschmolzener Form enthält,
iii) Abkühlen des in Schritt ii) erhaltenen Schlauchs, der das mindestens eine Copolyamid und das mindestens eine weitere Polymer (wP) jeweils in geschmolzener Form enthält, in einem Wasserbad auf eine erste Temperatur (T₁), wobei das mindestens eine Copolyamid und das mindestens eine weitere Polymer (wP) erstarren unter Erhalt eines ersten Schlauchfilms, der das mindestens eine Copolyamid und das mindestens eine weitere Polymer (wP) enthält,
   wobei der Schlauch während des Abkühlens über ein erstes Rollensystem geführt wird, wobei der Schlauch in seiner Länge verstreckt wird
iv) Erwärmen des in Schritt iii) erhaltenen ersten Schlauchfilms auf eine zweite Temperatur (T₂) unter Erhalt eines erwärmten ersten Schlauchfilms, der das mindestens eine Copolyamid und das mindestens eine weitere Polymer (wP) enthält,
v) Einblasen von Luft in den in Schritt iv) erhaltenen erwärmten ersten Schlauchfilm, wobei der erwärmte erste Schlauchfilm in seiner Breite verstreckt wird und wobei der erwärmte erste Schlauchfilm auf eine dritte Temperatur (T₃) abkühlt unter Erhalt des Polymerfilms (P), der das mindestens eine Copolyamid und das mindestens eine weitere Polymer (wP) enthält.

Gegenstand der vorliegenden Erfindung ist daher auch ein Verfahren zur Herstellung eines Polymerfilms (P) umfassend die Schritte
i) Bereitstellen mindestens eines Copolyamids, hergestellt durch Polymerisation der Komponenten
   (A) 15 bis 84 Gew.-% mindestens eines Lactams,
   (B) 16 bis 85 Gew.-% eines Monomergemischs (M), das die Komponenten
      (B1) mindestens eine C₃₂-C₄₀-Dimersäure und
      (B2) mindestens ein C₄-C₁₂-Diamin
      enthält,
   wobei die Gewichtsprozente der Komponenten (A) und (B) jeweils bezogen sind auf die Summe der Gewichtsprozente der Komponenten (A) und (B) in geschmolzener Form in einem Extruder.
i1) Bereitstellen mindestens eines weiteren Polymers (wP) in geschmolzener Form in einem weiteren Extruder,
ii) Extrusion des in Schritt i) bereitgestellten mindestens einen Copolyamids in geschmolzener Form aus dem ersten Extruder durch eine Ringdüse und Extrusion des in Schritt i1) bereitgestellten mindestens einen weiteren Polymers (wP) in geschmolzener Form aus dem weiteren Extruder durch die Ringdüse unter Erhalt eines Schlauchs, der das mindestens eine Copolyamid und das mindestens eine weitere Polymer (wP) jeweils in geschmolzener Form enthält,
iii) Abkühlen des in Schritt ii) erhaltenen Schlauchs, der das mindestens eine Copolyamid und das mindestens eine weitere Polymer (wP) jeweils in geschmolzener Form enthält, in einem Wasserbad auf eine erste Temperatur (T₁), wobei das mindestens eine Copolyamid und das mindestens eine weitere Polymer (wP) erstarren unter Erhalt eines ersten Schlauchfilms, der das mindestens eine Copolyamid und das mindestens eine weitere Polymer (wP) enthält,
   wobei der Schlauch während des Abkühlens über ein erstes Rollensystem geführt wird, wobei der Schlauch in seiner Länge verstreckt wird
iv) Erwärmen des in Schritt iii) erhaltenen ersten Schlauchfilms auf eine zweite Temperatur (T₂) unter Erhalt eines erwärmten ersten Schlauchfilms, der das mindestens eine Copolyamid und das mindestens eine weitere Polymer (wP) enthält,
v) Einblasen von Luft in den in Schritt iv) erhaltenen erwärmten ersten Schlauchfilm, wobei der erwärmte erste Schlauchfilm in seiner Breite verstreckt wird und wobei der erwärmte erste Schlauchfilm auf eine dritte Temperatur (T₃) abkühlt unter Erhalt des Polymerfilms (P), der das mindestens eine Copolyamid und das mindestens eine weitere Polymer (wP) enthält.

"Ein weiterer Extruder" bedeutet im Rahmen der vorliegenden Erfindung sowohl genau ein weiterer Extruder als auch zwei oder mehrere weitere Extruder. Bevorzugt sind zwei oder mehrere weitere Extruder.

Bevorzugt werden so viele weitere Extruder eingesetzt wie weitere Schichten, die das mindestens eine weitere Polymer (wP) enthalten, die im Polymerfilm (P) enthalten sein sollen. Beispielsweise werden 1 bis 13 weitere Extruder eingesetzt, bevorzugt 1 bis 11 weitere Extruder und insbesondere bevorzugt 1 bis 7 weitere Extruder.

Soll der Polymerfilm beispielsweise genau eine weitere Schicht, die das mindestens eine weitere Polymer (wP) enthält, enthalten, so wird genau ein weiterer Extruder eingesetzt. Soll der Polymerfilm (P) genau zwei weitere Schichten enthalten, die das mindestens eine weitere Polymer (wP) enthalten, so werden genau zwei weitere Extruder eingesetzt. Soll der Polymerfilm (P) genau fünf weitere Schichten enthalten, die das mindestens eine weitere Polymer (wP) enthalten, so werden genau fünf weitere Extruder eingesetzt.

Für den weiteren Extruder gelten die zuvor für den ersten Extruder beschriebenen Ausführungen und Bevorzugungen entsprechend.

Für das mindestens eine weitere Polymer (wP) gelten die zuvor beschriebenen Ausführungen und Bevorzugungen für das gegebenenfalls im Polymerfilm (P) enthaltene mindestens eine weitere Polymer (wP) entsprechend.

Erfindungsgemäß wird das mindestens eine weitere Polymer (wP) in Schritt i1) in geschmolzener Form bereitgestellt. "In geschmolzener Form" bedeutet, dass das mindestens eine weitere Polymer (wP) bei einer Temperatur, die oberhalb der Schmelztemperatur (T_{M(wP)}) des mindestens einen weitere Polymers (wP) liegt, bereitgestellt wird. "In geschmolzener Form" bedeutet also, dass das mindestens eine weitere Polymer (wP) eine Temperatur aufweist, die oberhalb der Schmelztemperatur (T_{M(wP)}) des mindestens einen weiteren Polymers (wP) liegt. Liegt das mindestens eine weitere Polymer (wP) in geschmolzener Form vor, so ist das mindestens eine weitere Polymer (wP) fließfähig.

"Fließfähig" bedeutet, dass das mindestens eine weitere Polymer (wP) in dem weiteren Extruder gefördert werden kann, und dass das mindestens eine weitere Polymer (wP) aus dem weiteren Extruder extrudiert werden kann.

Beispielsweise wird das mindestens eine weitere Polymer (wP) in Schritt i1) bei einer Temperatur im Bereich von 120 bis 350 °C, bevorzugt im Bereich von 130 bis 300 °C und insbesondere bevorzugt im Bereich von 140 bis 250 °C bereitgestellt, jeweils unter der Voraussetzung, dass die Temperatur, bei der das mindestens eine weitere Polymer (wP) bereitgestellt wird, oberhalb der Schmelztemperatur (T_{M(wP)}) des mindestens einen weiteren Polymers (wP) liegt.

Das mindestens eine weitere Polymer (wP) kann nach allen dem Fachmann bekannten Methoden in dem weiteren Extruder in geschmolzener Form bereitgestellt werden. Beispielsweise kann das mindestens eine weitere Polymer (wP) in geschmolzener oder in fester Form dem weiteren Extruder zugeführt werden. Wird das mindestens eine weitere Polymer (wP) dem weiteren Extruder in fester Form zugeführt, so kann es dem weiteren Extruder beispielsweise als Granulat und/oder als Pulver zugeführt werden. Das mindestens eine weitere Polymer (wP) wird dann in dem weiteren Extruder aufgeschmolzen und so in geschmolzener Form in dem weiteren Extruder bereitgestellt.

Es ist darüber hinaus möglich, dass in Schritt i1) zusammen mit dem mindestens einen weiteren Polymer (wP) in geschmolzener Form Additive in dem weiteren Extruder bereitgestellt werden. Die Additive werden mit dem mindestens einen weiteren Polymer (wP) in geschmolzener Form in dem weiteren Extruder üblicherweise compoundiert (vermischt). Verfahren hierzu sind dem Fachmann bekannt.

Für die Additive, die gegebenenfalls zusammen mit dem weiteren Polymer (wP) in geschmolzener Form in dem weiteren Extruder bereitgestellt werden, gelten die zuvor für die Additive, die gegebenenfalls zusammen mit dem mindestens einen Copolyamid in geschmolzener Form in dem ersten Extruder bereitgestellt werden, beschriebenen Ausführungen und Bevorzugungen entsprechend.

Die Additive, die gegebenenfalls zusammen mit dem weiteren Polymer (wP) in geschmolzener Form in dem weiteren Extruder bereitgestellt werden, und die Additive, die gegebenenfalls zusammen mit dem mindestens einen Copolyamid in geschmolzener Form in dem ersten Extruder bereitgestellt werden, können gleich oder verschieden sein. Bevorzugt sind die Additive, die gegebenenfalls zusammen mit dem weiteren Polymer (wP) in geschmolzener Form in dem weiteren Extruder bereitgestellt werden, von den Additive, die gegebenenfalls zusammen mit dem mindestens einen Copolyamid in geschmolzener Form in dem ersten Extruder bereitgestellt werden, verschieden.

Für die Schritte i), ii), iii), iv) und v) zur Herstellung des Polymerfilms (P), der das mindestens eine Copolyamid und das mindestens eine weitere Polymer (wP) enthält, gelten die zuvor beschriebenen Ausführungen und Bevorzugungen für die Schritte i), ii), iii), iv) und v) zur Herstellung des Polymerfilms (P), der das mindestens eine Copolyamid enthält, entsprechend.

Der in Schritt ii) erhaltene Schlauch, der das mindestens eine Copolyamid und das mindestens eine weitere Polymer (wP) jeweils in geschmolzener Form enthält, enthält das mindestens eine Copolyamid in mindestens einer ersten Schicht und das mindestens eine weitere Polymer (wP) in mindestens einer weiteren Schicht. Üblicherweise enthält der in Schritt ii) erhaltene Schlauch so viele erste Schichten, die das mindestens eine Copolyamid in geschmolzener Form enthalten, wie erste Extruder in Schritt i) eingesetzt worden sind und so viele weitere Schichten, die das mindestens eine weitere Polymer (wP) in geschmolzener Form enthalten, wie weitere Extruder in Schritt i1) eingesetzt worden sind.

Die erste Temperatur (T₁) in Schritt iii) liegt, wenn Schritt i1) durchgeführt wird, bevorzugt auch unterhalb der Schmelztemperatur (T_{M(wP)}) des mindestens einen weiteren Polymers (wP).

Die zweite Temperatur (T₂) in Schritt iv) liegt, wenn Schritt i1) durchgeführt wird, bevorzugt auch oberhalb der Glasübergangstemperatur (T_{G(wP)}) des mindestens einen weiteren Polymers (wP) und insbesondere bevorzugt auch unterhalb der Schmelztemperatur (T_{M(wP)}) des mindestens einen weiteren Polymers (wP).

Die dritte Temperatur (T₃) in Schritt v) liegt, wenn Schritt i1) durchgeführt wird, bevorzugt unterhalb der Schmelztemperatur (T_{M(wP)}) des mindestens einen weiteren Polymers (wP).

Es versteht sich von selbst, dass wenn Schritt i1) durchgeführt wird, der in Schritt v) erhaltene Polymerfilm (P) ein Multilayerfilm ist.

### Verpacken von Lebensmitteln

Der erfindungsgemäß hergestellte Polymerfilm (P) kann in einem Verfahren zum Verpacken von Lebensmitteln eingesetzt werden.

Gegenstand der vorliegenden Erfindung ist daher auch die Verwendung des erfindungsgemäßen Polymerfilms (P) zum Verpacken von Lebensmitteln.

Beispielsweise umfasst das Verfahren zum Verpacken von Lebensmitteln die folgenden Schritte.
a) Bereitstellen eines Lebensmittels, das von mindestens einem erfindungsgemäßen Polymerfilm (P) umhüllt ist, wobei der mindestens eine Polymerfilm (P) eine Bereitstellungstemperatur (T_{B}) aufweist.
b) Erwärmen des mindestens einen Polymerfilms (P) auf eine Schrumpfungstemperatur (T_{S}), wodurch der mindestens eine Polymerfilm (P) schrumpft unter Erhalt des Lebensmittels, das von dem mindestens einen geschrumpften Polymerfilm (P) umhüllt ist.

Beschrieben wird auch ein Verfahren zum Verpacken von Lebensmitteln umfassend die Schritte
a) Bereitstellen eines Lebensmittels, das von mindestens einem Polymerfilm (P) gemäß Anspruch 11 umhüllt ist, wobei der mindestens eine Polymerfilm (P) eine Bereitstellungstemperatur (T_{B}) aufweist,
b) Erwärmen des mindestens einen Polymerfilms (P) auf eine Schrumpfungstemperatur (T_{S}), wodurch der mindestens eine Polymerfilm (P) schrumpft unter Erhalt des Lebensmittels, das von dem mindestens einen geschrumpften Polymerfilm (P) umhüllt ist.

In Schritt a) wird das Lebensmittel bereitgestellt, das von mindestens einem Polymerfilm (P) umhüllt ist.

Für den mindestens einen Polymerfilm (P) gelten die zuvor für den Polymerfilm (P) beschriebenen Ausführungen und Bevorzugungen entsprechend.

Als Lebensmittel eignen sich alle bekannten Lebensmittel. Insbesondere geeignet sind Käseprodukte, Fleischprodukte und Wurstprodukte.

"Von dem mindestens einem Polymerfilm (P) umhüllt" bedeutet im Rahmen der vorliegenden Erfindung, dass mindestens 20 %, bevorzugt mindestens 50 %, insbesondere bevorzugt mindestens 80 % und am meisten bevorzugt 100 % der Oberfläche des Lebensmittels von dem mindestens einen Polymerfilm (P) bedeckt sind. "Bedeckt" bedeutet, dass der mindestens eine Polymerfilm (P) und die Oberfläche des Lebensmittels miteinander in direktem Kontakt stehen können. Ebenso ist es möglich, dass sich zwischen der Oberfläche des Lebensmittels und dem mindestens einen Polymerfilm (P) zumindest teilweise Luft befindet.

Der mindestens eine Polymerfilm (P) weist in Schritt a) eine Bereitstellungstemperatur (T_{B}) auf.

Die Bereitstellungstemperatur (T_{B}) liegt bevorzugt unterhalb der Glasübergangstemperatur (T_{G(C)}) des in dem mindestens einen Polymerfilm (P) enthaltenen mindestens einen Copolyamids.

Beispielsweise weist der Polymerfilm (P) eine Bereitstellungstemperatur (T_{B}) im Bereich von 5 bis 50 °C, bevorzugt im Bereich von 10 bis 45 °C und insbesondere bevorzugt im Bereich von 15 bis 40 °C auf.

Offenbart wird auch ein Verfahren zum Verpacken von Lebensmitteln, wobei die Bereitstellungstemperatur (T_{B}) unterhalb der Glasübergangstemperatur (T_{G(C)}) des in dem mindestens einen Polymerfilm (P) enthaltenen mindestens einen Copolyamids liegt.

Im Verfahren zum Verpacken von Lebensmitteln, liegt die Bereitstellungstemperatur (T_{B}) im Bereich von 5 bis 50 °C.

In Schritt b) wird der mindestens eine Polymerfilm (P) auf eine Schrumpfungstemperatur (T_{S}) erwärmt. Die Schrumpfungstemperatur (T_{S}) liegt daher oberhalb der Bereitstellungstemperatur (T_{B}) des Polymerfilms (P).

Bevorzugt liegt die Schrumpfungstemperatur oberhalb der Glasübergangstemperatur (T_{G(C)}) des in dem mindestens einen Polymerfilm (P) enthaltenen mindestens einen Copolyamids. Beispielsweise liegt die Schrumpfungstemperatur (T_{S}) im Bereich von 50 bis 200 °C, bevorzugt im Bereich von 60 bis 180 °C und insbesondere bevorzugt im Bereich von 70 bis 120 °C.

Beschrieben wird auch ein Verfahren, bei dem die Schrumpfungstemperatur (T_{S}) in Schritt b) oberhalb der Glasübergangstemperatur (T_{G(C)}) des in dem mindestens einen Polymerfilm (P) enthaltenen mindestens einen Copolyamids liegt.

Bei dem Verfahren zum Verpacken von Lebensmitteln, liegt die Schrumpfungstemperatur (T_{S}) in Schritt b) im Bereich von 50 bis 200°C.

Der mindestens eine Polymerfilm (P) kann nach allen dem Fachmann bekannten Methoden auf die Schrumpfungstemperatur (T_{S}) erwärmt werden. Beispielsweise kann er durch Wasserdampf oder Heißluft auf die Schrumpfungstemperatur (T_{S}) erwärmt werden. In Schritt b) schrumpft der mindestens eine Polymerfilm (P). Der mindestens eine Polymerfilm (P) kann bereits schrumpfen, während er auf die Schrumpfungstemperatur (T_{S}) erwärmt wird. Ebenso ist es möglich, dass der mindestens eine Polymerfilm erst dann schrumpft, wenn seine Temperatur bei der Schrumpfungstemperatur (T_{S}) liegt.

Unter "Schrumpfen" wird im Rahmen der vorliegenden Erfindung verstanden, dass das Volumen des mindestens einen Polymerfilms (P) kleiner wird gegenüber dem Volumen des mindestens einen Polymerfilms (P), der die Bereitstellungstemperatur (T_{B}) aufweist. Beispielsweise wird das Volumen des mindestens einen Polymerfilms (P) um 10 bis 80 % kleiner, bevorzugt um 20 bis 70 % kleiner und insbesondere bevorzugt um 30 bis 60 % kleiner, jeweils bezogen auf das Volumen des mindestens einen Polymerfilms (P), der die Bereitstellungstemperatur (T_{B}) aufweist.

Der mindestens eine geschrumpfte Polymerfilm (P) kann das Lebensmittel in Schritt b) ganz oder teilweise umhüllen.

Beispielsweise bedeckt der mindestens eine geschrumpfte Polymerfilm (P) mindestens 20 %, bevorzugt mindestens 50 %, insbesondere bevorzugt mindestens 80 % und am meisten bevorzugt 100 % der Oberfläche des Lebensmittels. "Bedeckt" bedeutet, dass der mindestens eine geschrumpfte Polymerfilm (P) und die Oberfläche des Lebensmittels miteinander in direktem Kontakt stehen können. Ebenso ist es möglich, dass sich zwischen der Oberfläche des Lebensmittels und dem mindestens einen geschrumpften Polymerfilm (P) zumindest teilweise Luft befindet.

Der mindestens eine geschrumpfte Polymerfilm (P), der das Lebensmittel umhüllt, weist eine besonders hohe Sauerstoffbarriere auf und schützt das Lebensmittel daher besonders gut vor dem Eintritt von Sauerstoff. Diese gute Sauerstoffundurchlässigkeit bleibt auch bei hohen Luftfeuchten und hohen Temperaturen, beispielsweise oberhalb von 25 °C, erhalten.

## Patentansprüche

1. Verfahren zur Herstellung eines Polymerfilms (P) umfassend die Schritte
i) Bereitstellen mindestens eines Copolyamids, hergestellt durch Polymerisation der Komponenten
(A) 15 bis 84 Gew.-% mindestens eines Lactams,
(B) 16 bis 85 Gew.-% eines Monomergemisches (M), das die Komponenten
(B1) mindestens eine C₃₂-C₄₀-Dimersäure und
(B2) mindestens ein C₄-C₁₂-Diamin
enthält,
wobei die Gewichtsprozente der Komponenten (A) und (B) jeweils bezogen sind auf die Summe der Gewichtsprozente der Komponenten (A) und (B), in geschmolzener Form in einem ersten Extruder,
ii) Extrusion des in Schritt i) bereitgestellten mindestens einen Copolyamids in geschmolzener Form aus dem ersten Extruder durch eine Ringdüse unter Erhalt eines Schlauchs, der das mindestens eine Copolyamid in geschmolzener Form enthält,
iii) Abkühlen des in Schritt ii) erhaltenen Schlauchs, der das mindestens eine Copolyamid in geschmolzener Form enthält, in einem Wasserbad auf eine erste Temperatur (T₁), wobei das mindestens eine Copolyamid erstarrt unter Erhalt eines ersten Schlauchfilms, der das mindestens eine Copolyamid enthält,
wobei der Schlauch während des Abkühlens über ein erstes Rollensystem geführt wird, wobei der Schlauch in seiner Länge verstreckt wird,
iv) Erwärmen des in Schritt iii) erhaltenen ersten Schlauchfilms auf eine zweite Temperatur (T₂) unter Erhalt eines erwärmten ersten Schlauchfilms, der das mindestens eine Copolyamid enthält,
v) Einblasen von Luft in den in Schritt iv) erhaltenen erwärmten ersten Schlauchfilm, wobei der erwärmte erste Schlauchfilm in seiner Breite verstreckt wird, und wobei der erwärmte erste Schlauchfilm auf eine dritte Temperatur (T₃) abkühlt unter Erhalt des Polymerfilms (P), der das mindestens eine Copolyamid enthält.

2. Verfahren gemäß Anspruch 1, **dadurch gekennzeichnet, dass** die Komponente (A) ausgewählt ist aus der Gruppe bestehend aus 3-Aminopropansäurelactam, 4-Aminobutansäurelactam, 5-Aminopentansäurelactam, 6-Aminohexansäurelectam, 7-Aminoheptansäurelactam, 8-Aminooctansäurelactam, 9-Aminononansäurelactam, 10-Aminodecansäurelactam, 11-Aminoundecansäurelactam und 12-Aminododecansäurelactam.

3. Verfahren gemäß Anspruch 1 oder 2, **dadurch gekennzeichnet, dass** die Komponente (B2) ausgewählt ist aus der Gruppe bestehend aus Tetramethylendiamin, Pentamethylendiamin, Hexamethylendiamin, Decamethylendiamin und Dodecamethylendiamin.

4. Verfahren gemäß einem der Ansprüche 1 bis 3, **dadurch gekennzeichnet, dass** der in Schritt ii) erhaltene Schlauch eine Dicke im Bereich von 10 µm bis 1 mm aufweist.

5. Verfahren gemäß einem der Ansprüche 1 bis 4, **dadurch gekennzeichnet, dass** die erste Temperatur (T₁) in Schritt iii) im Bereich von 5 bis 50 °C liegt.

6. Verfahren gemäß einem der Ansprüche 1 bis 5, **dadurch gekennzeichnet, dass** das mindestens eine Copolyamid eine Glasübergangstemperatur (T_{G(C)}) und eine Schmelztemperatur (T_{M(C)}) aufweist, und die zweite Temperatur (T₂) in Schritt iv) oberhalb der Glasübergangstemperatur (T_{G(C)}) und unterhalb der Schmelztemperatur (T_{M(C)}) des mindestens einen Copolyamids liegt.

7. Verfahren gemäß einem der Ansprüche 1 bis 6, **dadurch gekennzeichnet, dass** der erwärmte erste Schlauchfilm, der das mindestens eine Copolyamid enthält, während des Einblasens von Luft in Schritt v) über ein zweites Rollensystem geführt wird, wobei der erwärmte erste Schlauchfilm in seiner Länge verstreckt wird.

8. Verfahren gemäß einem der Ansprüche 1 bis 6, **dadurch gekennzeichnet, dass** der Polymerfilm (P) eine Dicke im Bereich von 0,1 µm bis < 1 mm aufweist.

9. Verfahren gemäß einem der Ansprüche 1 bis 8, **dadurch gekennzeichnet, dass** im Anschluss an Schritt v) die folgenden Schritte durchgeführt werden:
vi) Führen des in Schritt v) erhaltenen Polymerfilms (P) über mindestens eine dritte Rolle,
vii) Erwärmen des in Schritt v) erhaltenen Polymerfilms (P) auf eine vierte Temperatur (T₄), die oberhalb der Glasübergangstemperatur (T_{G(C)}) des mindestens einen Copolyamids liegt, unter Erhalt eines erwärmten Polymerfilms (P),
viii) Führen des in Schritt vii) erhaltenen erwärmten Polymerfilms (P) über mindestens eine vierte Rolle, unter Erhalt des Polymerfilms (P)
wobei der erwärmte Polymerfilm (P) zwischen Schritt vii) und Schritt viii), während Schritt viii) und/oder im Anschluss an Schritt viii) auf eine fünfte Temperatur (Ts), die unterhalb der Glasübergangstemperatur (T_{G(C)}) des mindestens einen Copolyamids liegt, abgekühlt wird.

10. Polymerfilm (P) erhältlich nach einem Verfahren gemäß einem der Ansprüche 1 bis 9.

## Claims

1. A process for producing a polymer film (P), comprising the steps of
i) providing at least one copolyamide produced by polymerizing the following components:
(A) 15% to 84% by weight of at least one lactam,
(B) 16% to 85% by weight of a monomer mixture (M) comprising the following components:
(B1) at least one C₃₂-C₄₀ dimer acid and
(B2) at least one C₄-C₁₂ diamine,
where the percentages by weight of components (A) and (B) are each based on the sum total of the percentages by weight of components (A) and (B), in molten form in a first extruder,
ii) extruding the at least one copolyamide provided in step i) in molten form from the first extruder through a ring die to obtain a tube comprising the at least one copolyamide in molten form,
iii) cooling the tube obtained in step ii) which comprises the at least one copolyamide in molten form in a water bath to a first temperature (T₁), solidifying the at least one copolyamide to obtain a first tubular film comprising the at least one copolyamide,
where the tube is guided through a first roller system during the cooling, where the tube is stretched lengthwise,
iv) heating the first tubular film obtained in step iii) to a second temperature (T₂) to obtain a heated first tubular film comprising the at least one copolyamide,
v) blowing air into the heated first tubular film obtained in step iv) to extend the width of the heated first tubular film, and cooling the heated first tubular film to a third temperature (T₃) to obtain the polymer film (P) comprising the at least one copolyamide.

2. The process according to claim 1, wherein component (A) is selected from the group consisting of 3-aminopropanolactam, 4-aminobutanolactam, 5-aminopentanolactam, 6-aminohexanolactam, 7-aminoheptanolactam, 8-aminooctanolactam, 9-aminononanolactam, 10-aminodecanolactam, 11-aminoundecanolactam and 12-aminododecanolactam.

3. The process according to claim 1 or 2, wherein component (B2) is selected from the group consisting of tetramethylenediamine, pentamethylenediamine, hexamethylenediamine, decamethylenediamine and dodecamethylenediamine.

4. The process according to any of claims 1 to 3, wherein the tube obtained in step ii) has a thickness in the range from 10 µm to 1 mm.

5. The process according to any of claims 1 to 4, wherein the first temperature (T₁) in step iii) is in the range from 5 to 50°C.

6. The process according to any of claims 1 to 5, wherein the at least one copolyamide has a glass transition temperature (T_{G(C)}) and a melting temperature (T_{M(C)}), and the second temperature (T₂) in step iv) is above the glass transition temperature (T_{G(C)}) and below the melting temperature (T_{M(C)}) of the at least one copolyamide.

7. The process according to any of claims 1 to 6, wherein the heated first tubular film comprising the at least one copolyamide is guided through a second roll system during the blowing-in of air in step v) to extend the length of the heated first tubular film.

8. The process according to any of claims 1 to 6, wherein the polymer film (P) has a thickness in the range from 0.1 µm to < 1 mm.

9. The process according to any of claims 1 to 8, wherein the following steps are conducted after step v):
vi) guiding the polymer film (P) obtained in step v) through at least one third roll,
vii) heating the polymer film (P) obtained in step v) to a fourth temperature (T₄) above the glass transition temperature (T_{G(C)}) of the at least one copolyamide to obtain a heated polymer film (P),
viii) guiding the heated polymer film (P) obtained in step vii) through at least one fourth roll to obtain the polymer film (P),
where the heated polymer film (P), between step vii) and step viii), during step viii) and/or after step viii), is cooled to a fifth temperature (T₅) below the glass transition temperature (T_{G(C)}) of the at least one copolyamide.

10. A polymer film (P) obtainable by a process according to any of claims 1 to 9.

## Revendications

1. Procédé de préparation d'un film polymère (P), comprenant les étapes suivantes :
i) la mise à disposition d'au moins un copolyamide préparé par polymérisation des composants
(A) 15 à 84 % en poids d'au moins un lactame,
(B) 16 à 85 % en poids d'un mélange de monomères (M) qui contient les composants
(B1) au moins un acide dimère en C₃₂-C₄₀ et
(B2) au moins une diamine en C₄-C₁₂,
les pourcentages en poids des composants (A) et (B) se référant à chaque fois à la somme des pourcentages en poids des composants (A) et (B), sous forme fondue dans une première extrudeuse,
ii) l'extrusion de l'au moins un copolyamide mis à disposition à l'étape i) sous forme fondue à partir de la première extrudeuse à travers une filière annulaire avec obtention d'un tube contenant l'au moins un copolyamide sous forme fondue,
iii) le refroidissement du tube obtenu à l'étape ii), qui contient l'au moins un copolyamide sous forme fondue, dans un bain d'eau à une première température (T₁), l'au moins un copolyamide se solidifiant avec obtention d'un premier film tubulaire qui contient l'au moins un copolyamide,
le tube étant guidé sur un premier système de rouleaux pendant le refroidissement, le tube étant étiré dans sa longueur,
iv) le réchauffage du premier film tubulaire obtenu à l'étape iii) à une deuxième température (T₂) avec obtention d'un premier film tubulaire réchauffé qui contient l'au moins un copolyamide,
v) l'injection d'air dans le premier film tubulaire réchauffé obtenu à l'étape iv), le premier film tubulaire réchauffé étant étiré dans sa largeur et le premier film tubulaire réchauffé refroidissant à une troisième température (T₃) avec obtention du film polymère (P) qui contient l'au moins un copolyamide.

2. Procédé selon la revendication 1, **caractérisé en ce que** le composant (A) est choisi dans le groupe constitué par le lactame de l'acide 3-aminopropanoïque, le lactame de l'acide 4-aminobutanoïque, le lactame de l'acide 5-aminopentanoïque, le lactame de l'acide 6-aminohexanoïque, le lactame de l'acide 7-aminoheptanoïque, le lactame de l'acide 8-aminooctanoïque, le lactame de l'acide 9-aminononanoïque, le lactame de l'acide 10-aminodécanoïque, le lactame de l'acide 11-amino-undécanoïque et le lactame de l'acide 12-aminododécanoïque.

3. Procédé selon la revendication 1 ou 2, **caractérisé en ce que** le composant (B2) est choisi dans le groupe constitué par la tétraméthylènediamine, la pentaméthylènediamine, l'hexaméthylènediamine, la décaméthylènediamine et la dodécaméthylènediamine.

4. Procédé selon l'une des revendications 1 à 3, **caractérisé en ce que** le tube obtenu à l'étape ii) présente une épaisseur dans la plage de 10 µm à 1 mm.

5. Procédé selon l'une des revendications 1 à 4, **caractérisé en ce que** la première température (T₁) à l'étape iii) se situe dans la plage de 5 à 50°C.

6. Procédé selon l'une des revendications 1 à 5, **caractérisé en ce que** l'au moins un copolyamide présente une température de transition vitreuse (T_{G(C)}) et une température de fusion (T_{M(C)}) et la deuxième température (T₂) à l'étape iv) est supérieure à la température de transition vitreuse (T_{G(C)}) et inférieure à la température de fusion (T_{M(C)}) de l'au moins un copolyamide.

7. Procédé selon l'une des revendications 1 à 6, **caractérisé en ce que** le premier film tubulaire réchauffé, qui contient l'au moins un copolyamide, est guidé sur un deuxième système de rouleaux pendant l'injection d'air à l'étape v), le premier film tubulaire réchauffé étant étiré dans sa longueur.

8. Procédé selon l'une des revendications 1 à 6, **caractérisé en ce que** le film polymère (P) présente une épaisseur dans la plage de 0,1 µm à < 1 mm.

9. Procédé selon l'une des revendications 1 à 8, **caractérisé en ce qu'**après l'étape v), les étapes suivantes sont mises en œuvre :
vi) le guidage du film polymère (P) obtenu à l'étape v) sur au moins un troisième rouleau,
vii) le réchauffage du film polymère (P) obtenu à l'étape v) à une quatrième température (T₄) supérieure à la température de transition vitreuse (T_{G(C}) de l'au moins un copolyamide, avec obtention d'un film polymère réchauffé (P),
viii) le guidage du film polymère (P) réchauffé obtenu à l'étape vii) sur au moins un quatrième rouleau, avec obtention du film polymère (P),
le film polymère (P) réchauffé étant refroidi entre l'étape vii) et l'étape viii), pendant l'étape viii) et/ou après l'étape viii) à une cinquième température inférieure à la température de transition vitreuse (T_{G(C)}) de l'au moins un copolyamide.

10. Film polymère (P) pouvant être obtenu par un procédé selon l'une des revendications 1 à 9.
